# EUROPEAN PATENT SPECIFICATION

(11) **EP 4 040 975 B1**
(45) Date of publication and mention of the grant of the patent: **11.02.2026**
(21) Application number: 20793428.2
(22) Date of filing: 12.10.2020
(51) Int. Cl.: A23G 1/00, A23G 1/34, A23G 1/48, A23L 7/10, A23L 7/126, A23L 7/139, A23G 1/56

(54) **NON-DAIRY CRUMB AND METHOD FOR ITS MANUFACTURE**
MILCHFREIES CRUMB UND VERFAHREN ZU SEINER HERSTELLUNG
MIETTE SANS PRODUITS LAITIERS ET SON PROCÉDÉ DE FABRICATION

(30) Priority: 11.10.2019 FI 20195877
(43) Date of publication of application: 17.08.2022
(73) Proprietor: OY Karl Fazer AB, 00941 Helsinki (FI)
(72) Inventor: WILLBERG, Monika, 01300 Vantaa (FI); ZITTING, Antti-Jussi, 01380 Vantaa (FI)
(74) Representative: Laine IP Oy
(86) International application number: PCT/FI2020/050671
(87) International publication number: WO 2021/069804

(56) References cited:
- WO-A1-2009/106264
- WO-A1-80/02636
- US-A- 2 887 386
- US-A- 4 435 430
- US-A1- 2016 021 899
- US-A1- 2019 216 103

## Description

### FIELD

The present invention relates to the field of food technology, in particular to a method for preparing non-dairy crumb for various food applications. More specifically, the present invention relates to a non-dairy, grain-based crumb, to a method for preparing said crumb, to food products containing the non-dairy, grain-based crumb, in particular confectionery and sweet bakery products, as well as to the use of the non-dairy, grain-based crumb in various food applications.

### BACKGROUND

The use of chocolate crumb in the manufacture of milk chocolate is well known in the chocolate industry. Traditionally, milk chocolate crumb refers to a co-dried mixture of milk, sugar and cocoa mass, whose lumpy, aerated structure resembles bread crumb. A typical milk crumb process involves pasteurizing and evaporating milk, dissolving sugar in the condensed milk, cooking e.g. in batch oven or in evaporators, adding cocoa liquor, kneading the obtained paste, drying it to a low moisture content and crushing to obtain crumb pieces of suitable size. Alternatively, sugar can be dissolved or partly dissolved in a mixture of milk powder and water before cooking.

A key feature of crumb production is Maillard reaction between amino acids of proteins (present in milk and cocoa), water and reducing sugars (such as lactose), which is responsible for the generation of caramel flavours in the crumb. The main benefit of chocolate crumb to milk chocolate is the unique, caramelised flavour that cannot be obtained by adding milk, cocoa and sugar as dry ingredients separately. Moreover, as a typical milk chocolate crumb recipe contains major part of the ingredients for chocolate making, the subsequent chocolate manufacture is simplified to processing crumb, fats and emulsifiers.

However, as an increasing number of people prefers vegan diets or must avoid milk and milk-based products due to health reasons (allergy, lactose intolerance), there is a need for non-dairy or vegan chocolate products and chocolate crumb substitutes in the confectionery industry. Moreover, non-dairy crumbs could also find use in the manufacture of non-dairy or vegan sweet baked products, for example as various fillings or coatings.

Several vegan or non-dairy chocolates are already on the market. Most of current non-dairy chocolate formulations are just void of milk-based ingredients, such as milk, condensed milk, butter oil, and cream, but in recent years also chocolate formulations, which comprise cocoa extenders based on cereal materials have been studied.

US Patent No. 6,521,273 discloses a malted-infused chocolate formulation comprising cocoa liquor or cocoa butter and a non-fat, cereal based cocoa extender. The cereal, for example malted barley, is toasted to a desired colour and flavour, grinded, cooled, and the cocoa liquor or cocoa butter is added.

US Patent No. 4,356,209 relates to an extended cocoa powder, which comprises cocoa and a defatted wheat germ having been toasted to a medium to dark colour. The toasted defatted wheat germ replaced up to 50% of the real cocoa in chocolate cake recipes.

WO 8002636 A1 relates to an imitation cocoa powder containing fat, flavour, a mixture of ground blend flours and optionally a colorant, wherein the mixture may be heated with added reducing sugars to obtain cocoa-like colors to the imitation cocoa powder. US 2,887,386 relates to and artificial chocolate flavor, which is obtain by reacting a partially hydrolysed oat protein with a saccharide by the application of heat to a mixture of reagents.

US 20150342214 A1 relates to a process for providing a cocoa replacer based on roasted wheat or roasted and/or malted barley. The process comprises mixing roasted wheat or barley with water, maintaining a temperature of at least 65°C for at least 30 minutes in an evaporation vessel, and spray-drying the solution to obtain the cocoa replacer. US2016021899A1 relates to processes for improving the flavour and texture of bran and germ components or ingredients which may be used for making stabilized whole grain flours and to food products, such as baked goods made from the improved bran components and whole grain flours having superior texture and flavour. US2019216103A1 relates to stabilized, whole-grain flour, food products including such stabilized, whole-grain flour, and methods of making stabilized, whole-grain flour and food products including the same, having superior flavour and texture.

However, there is still a need for novel intermediate products based on non-dairy ingredients that provide the final confectionery or sweet bakery products with good taste while also providing good sensory and rheological properties. A method of processing grain-based raw materials to obtain such an intermediate product (crumb), which possesses the required properties, is also needed. It would also be beneficial to be able to utilize all important nutritional fractions of grain, such as non-digestible fibres, in the manufacture of value added products. At the same time it would be desirable to use as much of only natural raw materials and natural ingredients as possible.

The present invention aims at fulfilling the above mentioned needs by providing a method for preparing non-dairy, grain-based crumb substitutes, particulary grain-based milk chocolate crumb substitutes, as well as tasty vegan chocolate products and non-dairy sweet baked products. Disclosed is also a method for modifying the flavour profile of grain-based materials, in particular a method for decreasing grainy flavours of grain-based materials and products containing the same.

### SUMMARY OF THE INVENTION

The invention is defined by the features of the independent claims. Some specific embodiments are defined in the dependent claims.

The present invention is based on the finding of a novel method of processing grain based raw materials to obtain an intermediate product, i.e. crumb, which provides the various final confectionery, sweet bakery products or other food products, such as drinks, spreadings and snacks, with good taste and sensory characteristics. Moreover, the crumb of the invention has an improved processability compared to grain-based raw materials not subjected to the method of the invention, in terms of viscosity, dusting, and general handling during processing.

According to a first aspect of the present invention, there is provided a method for preparing non-dairy, grain-based crumb as defined in claim 1.

According to a second aspect of the present invention, there is provided a non-dairy, vegan crumb as defined in claim 14.

According to a third aspect of the present invention, there is provided a food product as defined in claim 16, comprising the crumb of the invention.

A still further aspect of the invention is the use of the non-dairy crumb of the invention in the manufacture of various food products, typically in confectionery products, sweet baked products, drinks, spreadings and snack products.

Considerable advantages are obtained by the invention. First, the method of the invention provides non-dairy, grain-based crumb, which can be used in various food products, typically in sweet food products, wherein it provides said products with improved taste and improved sensory and rheological properties compared to unprocessed grain-based materials. In particular, the undesired strong taste of grain in vegan and non-dairy chocolate products is reduced or completely abolished when the crumb of the invention is used in place of corresponding unprocessed grain-based materials. Typically, the flavour profile of the products is caramelised, and the raw grain flavour is decreased. It is also possible to obtain desired flavour levels by adjusting the roasting level with the conditions used, particularly by the applied temperature.

By the methods of the invention it is thus possible to modify and adjust the flavor profile of the processed grain-based material according to the intended use of the processed grain-based material. Typically, the grainy flavours are decreased and the aroma profile is adjusted to obtain a more balanced but intensive aroma profile that supports the aroma profile of the intended use of the product.

Second, the processability of the crumb of the invention is remarkably improved compared to corresponding raw materials not processed according to the method of the invention. Improved processability refers to processability in terms of decreased viscosity, decreased dusting, particularly decreased flour dusting, decreased bridging and generally easier handling e.g. during chocolate making process, for example during roll refining process. Further, compared to oat milk/oat milk powder or other vegan "milk powders", the present process for preparing grain-based crumb, in particular oat-based crumb, enables to utilize all important nutritional fractions, such as non-digestible fibre, in chocolate making, if so desired.

Third, the crumb of the invention and the products made therefrom have an increased shelf-life compared to unprocessed raw material counterparts or products made from such unprocessed raw materials. Microbiological quality is improved and thus the shelf-life is increased. Unprocessed grain material may have challenges with pests, which is not desirable for example in chocolate production as only low to medium temperatures are used in processes.

Moreover, the grain-based crumb prepared by the method of the invention enables green label declaration of a corresponding chocolate containing said grain-based crumb. Essentially, clean label means making a product using as few ingredients as possible, and making sure those ingredients are items that consumers recognize and think of as wholesome-ingredients that consumers might use at home. It seeks out foods with easy-to-recognize ingredients and no artificial ingredients or synthetic chemicals, and it has become associated with "trust" with manufacturers of food. Since one of the aims of the invention is to use only natural raw materials and natural ingredients, for example the use of protein hydrolysates or hydrolysed proteins is avoided. Preferably the products and methods of the invention are free of protein hydrolysates and hydrolysed proteins.

Further features and advantages of the present technology will appear from the following description of some embodiments.

### BRIEF DESCRIPTION OF THE DRAWINGS

FIGURES 1A-C illustrate sensory results of orthonasal odour impressions (Fig. 1A), retronasal odour impressions (Fig. 1B), and taste/mouth feel (Fig. 1C) for Chocolates A and B. Chocolate A contained unprocessed oat flour while Chocolate B contained crumb prepared by the method of the invention starting from fermented oat base. Otherwise the manufacture of chocolate mass and the recipes were identical and the amounts of ingredients were equal.
FIGURE 2 illustrates comparison of analytical and sensory data between the Chocolates A and B, wherein Chocolate A contained unprocessed oat flour and Chocolate B contained crumb prepared by the method of the invention starting from fermented oat base.
FIGURE 3 is a chart of principal component analysis, illustrating the effect of processing parameters of oat-based crumb on the sensory attributes of seven chocolate samples, compared to reference chocolate containing oat flour.
FIGURE 4 shows a chart of principal component analysis of cereal sensory attributes, aroma compounds which influence cereal attributes, and processing parameters. Three chocolate samples containing oat-based crumb and a reference chocolate sample containing oat flour were included in the analysis.
FIGURE 5 illustrates a principal component analysis chart, which combines the sensory and analytical data.

### EMBODIMENTS

### DEFINITIONS

In the present context, the grain-based material is oat powder or oat flour, which is fermented or enzymatically treated with beta glucanase enzymes. More generally, the terms "grain" or "grain-based material" comprise any cereal based material, wherein the grain typically is oat, barley, rye, wheat or a mixture of any of these, preferably oat or rye. The grain or grain-based material may be for example in the form of powder, flakes, flour, grain milk, condensed grain milk, grain milk powder, enzymatically treated grain, fermented grain, fermented grain-based product, malted grain (malt extract) or any other fraction of grain.

"Oat-based material" in the present context includes oat powder or oat flour, which is fermented or enzymatically treated with beta glucanase enzymes. More generally, oat-based material includes oat powder, oat flour, oat flakes, oat milk, oat milk powder, fermented oat, fermented oat milk, condensed oat milk, enzymatically treated oat, oat okara (solid residue or left-over from oat milk production), or any other fraction of oat.

Disclosed is also "rye-based material", which is preferably rye flour or rye powder, for example whole grain rye flour, or a mixture of oat flour and rye flour.

"Vegetable fats" include all edible vegetable oils and fats. Depending on the application, the desired melting profile and taste, vegetable fats such as cocoa butter, cocoa butter equivalent, and vegetable filling fats, such as nuts, coconut and almonds in any form, for example as milk, paste, powder, flakes, pieces, cream or oil, can be used.

"Cocoa raw material" includes but is not limited to cocoa mass, cocoa powder, cocoa butter, unroasted and roasted cocoa nibs or a mixture of different cocoa components.

Traditionally in chocolate production the term "crumb" refers to milk chocolate crumb, which is a co-dried mixture of milk, sugar and cocoa liquor. Within the present disclosure the term "crumb" refers to a non-dairy, grain-based product, the raw materials of which comprise components required for Maillard reaction (proteins, water and reducing sugars) and which has been processed according to the method of the invention, to generate caramel-like flavours, other toasted, browned flavours and other flavour components based on Maillard reaction, and in particular to decrease the level of grainy flavours in the crumb components.

"Sugars" comprise all vegetable based sugars. Sugars thus include but are not limited to saccharose (sucrose), fructose, glucose, maltose and any combinations of thereof, preferably saccharose or a mixture of saccharose and fructose or glucose and fructose. "Sugars" also include sugars generated from grain starch by the action of enzymes (either by natural fermentation or by using a starter) to obtain reducing sugars in the aqueous mixture without added sugars. Added sugar, typically saccharose (sucrose), is preferably in granulated, pre-ground form but also other forms such as liquids, syrups or their combinations and fibers, are applicable. Further examples of vegetable based sugars include syrups extracted from fruit or berries. In some embodiments, sugars may also include polyols (sugar alcohols).

Within this disclosure, the term "roasting" refers to heating of materials, typically an aqueous mixture of sugar and grain-based material, for a roasting time at a roasting temperature, which are sufficient for Maillard reaction to take place between the grain proteins and reducing sugars of the mixture. The required roasting time and temperature depend on the components and the water content of the material to be roasted, on the applied pressure, as well as on the desired output. In general, the higher the temperature, the shorter the time required for roasting. Pressure can be used to accelerate or to slow down the process. Typically, temperature at the beginning of roasting is the boiling point temperature of the mixture, at an atmospheric pressure, and increases during roasting. For example, if the temperature is about 100°C at the beginning of roasting, it may be be around 120°C near the end of roasting. Roasting time is not limited. Typically it is at least 10 minutes, preferably at least 20 minutes or at least 30 minutes, but it may in some cases be less than 10 minutes, depending also on the available manufacturing equipment.

As mentioned above, the process parameters during the roasting step are chosen so that Maillard reactions take place between proteins and reducing sugars in the aqueous mixture of sugar and grain-based material. Free amino acids and especially small peptides that are formed naturally from proteins, act like precursors in Maillard reaction, reacting with reducing sugars and forming volatile flavour compounds.

In general, Maillard reactions lead to changes in food color, organoleptic properties, protein functionality, and protein digestibility. Maillard reactions are initiated by a condensation of amino groups on protein, peptides, and amino acids with carbonyl groups on reducing sugars, resulting in Schiff base formation and forming of ketosamines. Ketosamines react further to reactive α-dicarbonyl species which reacts further for example with other amines, guanidines, and thiols. These intermediates may undergo Strecker degradation. Further downstream reactions include formation of different glycation end products, Maillard reaction intermediates.

Strecker aldehydes are important substances for flavour development in foods, such as bread, coffee, and cocoa. Due to their low olfactory threshold, the most important Strecker aldehydes formed in foods are 2-methylbutanal (from Ile), 3-methylbutanal (from Leu), phenylacetaldehyde (from Phe), methylpropanal (from Val), and methional (from Met).

Disclosed is also a method to decrease grainy flavours of grain-based raw materials, typically such cereal sensory attributes as nutty/grainy and raw grain/fatty/oily. Said cereal sensory attributes are often linked to aroma compounds such as 3-methyl butanoic acid, 2-methyl butanoic acid, hexanoic acid, 1 pentanol, 1-hexanol and o-guaiacol, in particular 2-methyl butanoic acid, 1 pentanol, 1-hexanol and o-guaiacol. Other aroma compounds which may contribute to the above mentioned cereal sensory attributes include for example hexanal and trimethylpyrazine. On the other hand, some aroma compounds are usually negatively correlated to the cereal sensory attributes nutty/grainy and raw grain/fatty/oily. Such aroma compounds include for example trans,trans-2,4-decadienal, trans,cis-2,6-nonadienal, 2,3-pentanedione, maltol and nonanal, in particular nonanal.

As disclosed above, it has now been found that by roasting a mixture of sugar and grain-based material, wherein the mixture includes cocoa raw material added before, during or subsequent to roasting and optionally also vegetable fat, and by evaporating water from the roasted mixture, a grain-based crumb is obtained which can be used in various food products, typically sweet food products. The grain-based crumb of the invention provides said food products with improved sensory and rheological properties compared to unprocessed grain-based material. In particular, the undesired taste of grain in chocolate products is reduced or completely abolished when the crumb of the invention is used in place of corresponding unprocessed grain-based material. Moreover, it has been found out that chocolates made from grain-based crumb of the invention are smoother and have an improved melting profile compared to a corresponding chocolate prepared from untreated grain flour.

The method according to the invention for preparing grain-based crumb thus comprises the steps as defined in claim 1.

The process for preparing a grain-based crumb can be carried out in any suitable device or assembly comprising means for mixing, heating, and evaporation or other drying operations. For example, it is possible to use a cooker, a mixing reactor with a heating jacket, a cooking extruder, or a combination of a cooker and/or an oven.

In principle, the method of the invention can be carried out as a batch process or as a continuous process. However, control of Maillard reactions is typically easier in a batch process. Also the adjustment and modification of the level of the desired flavors and aroma compounds is typically easier in a batch process.

In one embodiment, the step of providing a mixture of sugar and grain-based material comprises mixing water and sugar under slightly increased temperature, for example at 50-90°C, thus dissolving at least some of the sugar into water, followed by adding the grain-based material into the mixture. In one embodiment, sugar and grain-based material are mixed at the same time into water, preferably at a temperature slightly over room temperature, such as for example 40-80°C, before roasting is started.

Typically, sugar in the aqueous mixture comprising sugar and grain-based material has a concentration, which may be over the saturation point of sugar in the applied temperature and pressure conditions or lower. Low amounts of sugar are typically used, if a final product with low sugar content is desired.

It is also possible to use enzymes to create reducing sugars to the aqueous medium from grain starch by the action of enzymes (either by natural fermentation or by adding a starter) without added sugars.

Thus in one embodiment the above mentioned step a) comprises adding sugar to the aqueous medium, or providing sugar to the aqueous medium by the action of enzymes, or a combination of both.

In one embodiment the added sugar is selected from the group consisting of saccharose (sucrose), fructose, glucose, maltose and any combinations of thereof, preferably saccharose. The added sugar can be for example in granulated, pre-ground form but also other forms such as liquids, syrups or their combinations and fibers, are applicable, as well as syrups extracted from fruit or berries.

In preferred embodiments, the aqueous medium is water, fermented grain base or enzyme treated grain base. In one preferred embodiment, the aqueous medium is water. However, also other aqueous media can be used. The amount of water can be adjusted according to the water content of the grain-based material. If the water content of the grain-based material is relatively high, such as in case of grain milk bases, fermented grain bases and enzyme treated grain bases, the amount of water is typically decreased.

The dry matter content of the aqueous mixture during roasting is typically about 40-95 %, even 40-98%, preferably about 60-90 %, more preferably about 80-90 %. Lower dry matter contents are also possible but this requires long processing times as the evaporation time will be longer.

Preferably, the aqueous mixture of sugar and grain-based material has a water activity (aW) value of 0.7-0.9. However, water activity value can be adjusted according to the desired flavour profile.

pH of the aqueous mixture of sugar and grain-based material may vary depending on the desired end product and its flavour profile. In general, browning due to Maillard reaction increases with increasing pH, up to a pH of around 10. Typically, pH of the aqueous mixture of sugar and grain-based material is around 5-7. If necessary or desired, pH can be adjusted using suitable acidic or alkalic components or by fermentation as evident to persons skilled in the art.

In one embodiment, the aqueous medium is a a fermented oat base. In order to obtain a fermented grain base, the grain raw material, typically grain flour, and preferably a small amount of sugar (to allow better growth potential for fermentation bacteria) are mixed with cold or hot water and a starter is added at a suitable temperature. If desired, the mixture can be pasteurized to guarantee a suitably pure base for fermentation bacteria. Fermentation can be carried out as long as needed or desired, typically for several hours. Natural fermentation without added starter can also be used.

The fermented oat base can be used in the manufacture of grain-based crumb. Typically, sugar is added to the mixture before roasting. If the dry matter content of the mixture is low, some additional grain flour may also be added before roasting. For example, fermented oat base usually has a dry matter content of 5-30%, typically about 10-20%. If necessary, some oat flour may be added to increase the dry matter content, for example to achieve a dry matter content of about 40-70% or higher at the beginning of roasting. Alternatively, it is possible to increase the dry matter content of the aqueous mixture at the beginning of roasting or by using vacuum and temperature to remove extra water.

In another embodiment, the aqueous medium is an enzyme-treated oat base, treated enzymatically with beta glucanase enzymes. Enzyme treatments lower the viscosity of grain starch during the heating process and may also increase the level of reducing sugars to obtain more reactive components for Maillard reaction. Endoamylases catalyse hydrolysis in a random manner within starch molecule decreasing viscosity, and exoamylases (mainly glucoamylases) increase the level of glucose in the grain base acting on a glycosidic bond near an end of the starch molecule. Beta-glucanases break down β-glucan, which is naturally present e.g. in oat. The enzymes include betaglucanases but not added alfa-amylases. Enzyme activity may also be provided by fermenting or by natural enzymes.

In order to obtain an enzyme-treated grain base, in one embodiment enzyme(s) are added to a mixture comprising the grain raw material in water, typically to about 10-20 wt-% grain solution in water, and let to react for an appropriate time. After enzyme treatment, the obtained mixture can be used as such in the manufacture of grain-based crumb or it can be centrifuged to remove any insoluble parts.

In an embodiment, wherein the enzyme treated grain base is centrifuged before the roasting step, the obtained enzyme treated grain base resembles fresh grain milk, particularly when oat is used as starting material and the enzymes comprise glucoamylase and optionally endoamylase. When oat crumb prepared from centrifuged, with glucoamylase and endoamylase treated oat base was used in the manufacture of oat chocolate, it was found that rheological properties were slightly improved compared to the chocolate manufactured from oat crumb containing also the insoluble part of enzyme-treated oat base. However, the centrifugation is not necessarily required for the successful manufacture of chocolate from oat crumb prepared from enzyme treated grain base.

In an embodiment, where oat crumb was prepared from oat base material treated with beta glucanase enzymes and used in the manufacture of oat chocolate, it was found that the mouthfeel of the chocolate was changed compared to corresponding chocolate manufactured without betaglucanase treatment. Typically there was an increase in chocolate melting but a decrease in stickiness and fatty mouthfeel. Depending on the intended use, such sensory properties may be desirable or undesirable.

The enzyme-treated grain base can thus be used in the manufacture of grain-based crumb. Sugar may be added to the enzyme-treated grain base before the roasting step. If the dry matter content of the mixture is low, some additional grain flour may also be added before roasting or some water can be removed at the beginning of roasting. For example, enzyme-treated oat base often has a dry matter content of 5-30%, typically about 10-20%, and thus some oat flour may be added or some water can be removed to increase viscosity before roasting step.

As stated above, the grain-based starting material is oat powder or oat flour, which is fermented or enzymatically treated with beta glucanese enzymes, and has a lower dry matter content than grain flour. It is possible to increase the dry matter content of the aqueous mixture at the beginning of roasting or by using vacuum and temperature to remove extra water. Alternatively, it is possible to add some grain flour to increase viscosity before roasting.

The method of the invention may thus comprise enzymatic treatment of the grain-based raw material, fermentation of the grain-based material using an added starter, natural fermentation of the grain-based raw material, or any combinations thereof.

It is also possible to use condensed or malted forms of grain-based material.

Sugar can be selected from conventional plant-based sugar forms known to a person skilled in the art, such as saccharose, fructose, glucose and any combinations thereof. In an embodiment, where sugar is added to the mixture, typically saccharose, preferably granulated saccharose, or a mixture of saccharose and fructose are used. Sugar, particularly saccharose, improves processing and mixing of the raw materials, while also acting as a flavour carrier. Additional sugars, such as fructose, may further increase Maillard reactions. Typically sugar is added in solid form but in some embodiments also liquid forms can be used.

In an embodiment, at least one enzyme is added to the mixture comprising sugar and grain-based material in water, typically an enzyme that creates reducing sugars that can act as precursors in Maillard reaction. Such enzymes include but are not limited to amylases, such as endoamylases and glucoamylases. It is also possible to create reducing sugars in the aqueous mixture only by the action of enzymes, thus avoiding added sugars. In one embodiment, sugars may be provided to the aqueous mixture both by the action of enzymes (either by natural fermentation or by adding a starter) and by adding of sugars.

During roasting of the mixture comprising sugar and grain-based material in water, Maillard reaction and optionally also caramelization take place. Maillard reaction takes place between amino acids of proteins and reducing sugars present in the mixture and provides the crumb with a pleasant flavour and color. In caramelization, certain sugars are pyrolysed, thus resulting in additional flavour and colour in the crumb. However, caramel flavours are formed also in Maillard reactions. In some preferred embodiments, the reaction conditions and raw materials are selected so that both Maillard reaction and caramelization take place.

The dry matter content of the aqueous mixture during roasting is about 40-95 %, preferably about 60-90 %, more preferably about 80-90 %.

The aqueous mixture of sugar and grain-based material is roasted for a roasting time at a roasting temperature sufficient for Maillard reaction and optionally caramelization to take place. As understood by persons skilled in the art, the required roasting time depends on the water content of the material, on the applied temperature and pressure, on the reacting components, pH, the overall process design, and the desired output i.e. the preferred roasting degree or flavour profile. Typically the roasting time is at least 10 minutes, preferably at least 20 minutes or at least 30 minutes, for example 20-120 minutes, preferably 30-60 minutes at normal atmosphere. Shorter times with higher roasting temperatures and/or pressure are possible, such as less than 10 minutes. Alternatively longer times can be used combined with low temperatures. Roasting time is thus not limited but depends on the desired output. To obtain a preferred roasting degree, different time and temperature combinations can be used.

At the very beginning of roasting step, the temperature of the mixture is about the temperature of the added raw materials, whereafter it is raised to the boiling point temperature of the mixture by heating. Typically, temperature at the beginning of actual roasting is thus the boiling point temperature of the mixture, at an atmospheric pressure, and it increases during roasting. During heating, the boiling point of the mixture is determined by the cooking parameters and the components of the mixture. Typically the temperature during roasting ranges between 90°C and 140°C, or 90°C and 120°C, depending on the machinery and the desired flavour profile.

In one embodiment of the invention, the mixture is heated to the boiling temperature at the beginning of roasting and left to stand without further heating.

In embodiments, vegetable fat can be added to the mixture comprising sugar, grain-based material, and water. Said vegetable fat can be added to the mixture before, during or subsequent to roasting, but before evaporation. In one embodiment, vegetable fat is added to the mixture after roasting and before evaporation, preferably vacumation. In one embodiment, vegetable fat is added to the mixture before roasting. In a further embodiment, vegetable fat is added to the mixture during roasting or partly during roasting and partly after roasting.

In one preferred embodiment of the invention, vegetable fat is added to the mixture after roasting and before evaporation.

Vegetable fat is chosen according to the application. Preferably, vegetable fat is cocoa butter, cocoa butter equivalent (CBE), a vegetable filling fat, preferably vegetable filling fat from nuts, coconut or almonds, typically in the form of milk, paste, powder, flakes, oil, cream or pieces, for example coconut oil, coconut fat, almond oil, or nuts and almonds as such, including any combinations thereof. Preferably, the crumb of the invention comprises cocoa butter. However, also other vegetable fats can be used in addition to or instead of cocoa butter.

In one embodiment, the method of the invention comprises also the step of adding other plant based ingredients to the mixture. Such other plant based ingredients are preferably selected from fibres, defatted almond powders and defatted nut powders. Other plant based substances like fibres are typically added to adjust desired flavour, texture or the levels of other ingredients. In one preferred embodiment, fibre is included in a mixture which comprises grain-based material and aqueous medium but which does not comprise added sugars and wherein sugars are created by the action of enzymes.

The intended use of the grain-based crumb may be in the production of chocolate flavoured confectionery or sweet bakery products.Cocoa raw material, such as cocoa powder, cocoa mass, cocoa butter or a mixture of different cocoa raw materials, is added to the aqueous mixture of sugar and grain-based material before, during or subsequent to roasting. The term "cocoa powder" refers to the part of cocoa mass which remains after cocoa butter is separated from cocoa mass. Further examples of suitable cocoa raw materials include unroasted and roasted cocoa nibs. Optionally, the aqueous mixture of sugar and grain-based material also comprises vegetable fat when cocoa powder, cocoa mass or both are added, typically when cocoa powder is added.

In one embodiment, cocoa raw material, such as cocoa mass, is added to the mixture after roasting and before evaporation. In a further embodiment, cocoa raw material is added to the mixture before roasting. In another embodiment, cocoa raw material, such as cocoa mass, cocoa powder or both, are added to the mixture partly before, partly during, and partly subsequent to roasting, but before evaporation.

After roasting, the roasted mixture comprising at least sugar, grain-based material and cocoa raw material is subjected to evaporation. Evaporation may be thermal evaporation or vacuum evaporation, preferably vacuum evaporation (vacumation), which may also be partial vacuum evaporation. Examples of thermal evaporation include for example oven drying, typically without vacuum or roller drying.

In evaporation, preferably vacuum evaporation, a phase change from liquid to powder form takes place. Typically, vacuum evaporation is carried out at a pressure of from about -1000 mbar to about -800 mbar (-100 - -80 kPa). Usually the phase change from liquid to powder form starts to take place during the first minutes of vacuum evaporation. After phase change to powder form, further evaporation time is dependent on the desired water level of the end product. Evaporation, typically vacuum evaporation, is continued until a desired final water content is achieved. Typically a vacuum evaporation time of at least 10 minutes, for example about 10-40 minutes is used.

Typically the temperature after vacuum evaporation is for example from about 50°C to about 80°C. The end temperature depends on the starting temperature, starting water content, vacuuming time and conditions (heating, cooling).

After evaporation, grain-based crumb is obtained in powder form. Typically it has an end water content of about 0.5-5 % by weight, 1-5 % by weight. 1-4 % by weight, or 1-3 % by weight, such as about 1.2-2.8% by weight. The desired end water content depends on the intended use of the grain-based crumb and is affected by several factors: water content vs active water, powder transportation (too wet may cause lumbs), subsequent process steps (packing or straight to the next unit operation), phase stage of different components (sugars, carbohydrates: glassy / rubbery / crystal structure). The obtained crumb is cooled or allowed to cool.

If desired or needed, the crumb is ground to particles or pieces of a suitable size, wherein the suitable size depends on the intended use of the crumb.

One embodiment of the invention is a method for preparing an oat-based crumb, wherein the method comprises the steps of:
a) providing an aqueous mixture of sugar and oat powder or oat flour, wherein the oat powder or oat flour is fermented or enzymatically treated with beta glucanase enzymes;
b) roasting the aqueous mixture of sugar andoat powder or oat flour, preferably at a temperature of 90-140 °C or 100-120°C preferably for at least 10-30 minutes, to obtain a roasted liquid mixture;
c) adding and mixing cocoa powder, cocoa mass, cocoa butter or any combination thereof and optionally vegetable fat to the aqueous mixture of sugar and oat powder or oat flour before, during or subsequent to roasting, preferably before or during roasting;
d) subjecting the roasted liquid mixture to vacuum evaporation, preferably at a pressure of -100 - -80 kPa, to obtain a phase change of the roasted mixture from liquid to powder form; and
e) optionally grinding the vacuum evaporated powder to obtain oat-based crumb of desired size.

A further embodiment of the invention is a method for preparing an oat-based crumb, wherein the method comprises the steps of
a) providing an aqueous mixture of sugar and oat powder or oat flour, wherein the oat powder or oat flour is fermented or enzymatically treated with beta glucanase enzymes;
b) roasting the aqueous mixture of sugar and oat powder or oat flour, preferably at a temperature of 90-140 °C or 100-120°C preferably for at least 10-30 minutes, to obtain a roasted liquid mixture;
c) adding and mixing cocoa mass, cocoa powder or both to the mixture before, during or subsequent to roasting;
d) adding cocoa butter before, during or subsequent to roasting;
e) subjecting the roasted liquid mixture to vacuum evaporation, preferably at a pressure of about -100 - -80 kPa, to obtain a phase change of the roasted mixture from liquid to powder form; and
f) optionally grinding the vacuum evaporated powder to obtain oat-based crumb of desired size.

In one embodiment, cocoa butter is added subsequent to roasting and before evaporation to the roasted liquid mixture.

In one embodiment, vacuum evaporation is carried out at a pressure of about -100 - -80 kPa.

According to the invention, the aqueous mixture of sugar and oat-based material is a mixture of sugar and oat flour or oat powder, wherein the oat powder or oat flour is fermented or enzymatically treated with beta glucanase enzymes.- In one embodiment, the aqueous mixture of sugar and oat flour or oat powder, wherein the oat powder or oat flour is fermented or enzymatically treated with beta glucanase enzymes, comprises added sugar and sugar created by the action of enzymes to the enzyme-treated oat base.

In one embodiment of the invention, the method comprises the step of adding vegetable fat to the grain-based crumb to obtain a slurry, which is wet-grinded and used as pumpable raw material in the manufacture of confectionery products, preferably chocolate or chocolate fillings.

In a preferred embodiment, the method according to the invention also comprises the step of using the obtained grain-based crumb in the manufacture of non-dairy confectionery and bakery products, in particular chocolate. In a further preferred embodiment, the method of the invention comprises the step of using the obtained oat-base crumb in the manufacture of non-dairy confectionery and bakery products, in particular chocolate or chocolate type products. Typically the bakery products include sweet bakery products.

A further object of the invention is non-dairy crumb, that is obtainable by the method according to the invention, which comprises a roasted mixture of sugar and oat flour or oat powder, wherein the oat powder or oat flour is fermented or enzymatically treated with beta glucanase enzymes, with cocoa raw material, wherein the cocoa raw material is selected from cocoa mass, cocoa powder, cocoa butter and any combination thereof, preferably together with vegetable fat, wherein the crumb has a water content of 0.5-5 % by weight, typically 1-5%, preferably 1-4%, more preferably 1-3% by weight, and wherein the grainy flavour of the grain flour or grain powder is decreased compared to unroasted grain flour or grain powder.

In a preferred embodiment, the decrease of grainy flavour in the crumb of the invention includes a decrease in cereal sensory attributes nutty/grainy and raw grain/fatty/oily. Preferably, the decrease of grainy flavours comprises a decrease in concentrations of aroma compounds 1-pentanol, 1-hexanol, 2-methylbutanoic acid and o-guaiacol.In one preferred embodiment, the crumb comprises or is a roasted mixture of saccharose or saccharose and fructose and oat-based material, preferably together with cocoa butter. In one embodiment the crumb comprises or is a roasted mixture of saccharose and oat powder or oat flour, optionally together with cocoa butter.

Disclosed is also a grain-based crumb, which comprises or consists essentially of (percentages are given by weight)
10-30 %, preferably 10-28.5%, grain based dry material base
25-71 %, preferably 25.5-70.5 %, sugar
6-60 %, preferably 6-58 % water
0-4 %, preferably 0-4.4 %, vegetable fat
0-20 %, preferably 0-18.5 %, cocoa mass/powder.

The crumb of the invention can be used in the manufacture of various food products, preferably confectionery products, sweet baked goods and sweet bakery products. Such confectionery or food products include but are not limited to chocolate type products, fillings for biscuit type products, filled chocolate products, such as chocolate pralines, chocolate tablets, chocolate coated inclusions, chocolate coated or filled puffed cereals, cereal bars with inclusions or coated with chocolate, to name a few.

Examples of sweet baked products that may contain the crumb of the invention include but are not limited to filled or non-filled biscuit type products or cakes, croissants and tartes, fillings for such products, chocolate coated cakes, and chocolate coated bars.

In further embodiments, the crumb of the invention finds use also in various other food products, such as drinks, spreadings and snack products, either sweet or salty snacks. One embodiment of the invention is a ready-to-use, vegan, oat-cocoa crumb that can be mixed with water and thus replaces instant cocoa powders in the preparation of cocoa drinks.

Generally, the crumb of the invention can be included in such food applications where milk powder is typically used. It can be used as a dry substitute for milk for example in bakeries and in home-baking, providing a good shelf-life as a further advantage.

As stated above, the method for decreasing grainy flavours of grain-based products comprises the steps of preparing a grain-based crumb according to the process of the invention and using the grain-based crumb as an ingredient in the manufacture of the grain-based products. Typically the method decreases such cereal sensory attributes as nutty/grainy and raw grain/fatty/oily. The decrease of grainy flavours may comprise a decrease in concentrations of aroma compounds 1-pentanol, 1-hexanol, 2-methylbutanoic acid and o-guaiacol. The method for decreasing grainy flavours of grain-based products may increase caramel-like flavours of said grain-based products.

### EXPERIMENTAL

### Example 1. Preparation of oat-based crumb (not according to the invention)

Oat-based crumb was prepared by the method of the invention using oat flour as starting material. The ingredients of oat-based crumb are given in Table 1.

**Table 1. Ingredients of oat-based crumb**

| Ingredients | Input (kg) | % | Water (%) | Dry content (%) | to refining |
|---|---|---|---|---|---|
| Oat powder | 3.35 | 18.59 | 1,49 | 17,10 | 20,02 |
| Granulated sugar | 12.55 | 69,72 | 0,00 | 69,72 | 81,62 |
| Water | 1,32 | 7,32 | 7,32 | 0,00 | 0,00 |
| Cocoa butter | 0,79 | 4,37 | 0,00 | 4,37 | 5,11 |
| Total | 18,00 | 100,00 | 8,81 | 91,19 | 106,76 |

First, water and sugar were added to a suitable crumb cooker, such as a heating and mixing kneading reactor, provided with means for mixing, steam heating and optionally vacuum evaporation, and mixed at a temperature of 75°C for 5 minutes. Oat powder was added, and mixing was continued at a steam/water jacket temperature of 130°C for 30 minutes (roasting step). If desired, other ingredients such as cocoa mass could have been added at this stage, i.e. before or during roasting. At the end of roasting, product temperature was about 107°C.

Next, cocoa butter was added to the liquid mixture. If desired, cocoa mass could have been added at this stage also. The mixture was subjected to vacumation for 15 minutes with mixing. Vacumation pressure was -998 mbar and the crumb temperature at the end of vacumation 60-80°C. During vacumation, phase change from liquid to powder started during the first minutes. Evaporation was continued as long as the desired water content was achieved, which in this case took place in 15 minutes.

After vacumation, the obtained crumb had a water activity value of 0.35-0.50. The crumb was cooled and ground to obtain an oat-based chocolate crumb having a water content of 1.0-3.0% (analysis method Karl Fischer (KF) titration).

The above described process can be modified by using different raw materials, process times, temperatures and pH values and by regulating the number of reacting components of Maillard reaction, according to the desired output, especially chocolate crumb flavour profile.

In particular, the following amounts of ingredients of grain-based crumbs were tested. The amounts can also be lower or higher. Percentages are given by weight.

| | |
|---|---|
| Grain based dry material base | 10 - 28.5 % |
| Sugar | 25.5 -70.5 % |
| Water | 6 - 58 % |
| Vegetable fat | 0 - 4.4 % |
| Cocoa mass/powder | 0 - 18.5 % |
| Nuts, almonds | |
| Coconut | |

Also various process parameters using different grains as starting materials were tested, for example roasting temperatures of 90-130 °C, roasting times of 30-120 minutes, vacumation times of 15-45 minutes, and end water contents of 1.4-2.8%. The process parameters can be optimized to meet the expectations of the grain-based crumb flavour profile.

### Example 2. Oat chocolate made from oat-based crumb (not according to the invention)

The oat-based crumb of Example 1 was used in the manufacture of oat chocolate. The ingredients of oat crumb chocolate are given in Table 2.

**Table 2. Ingredients of oat crumb chocolate**

| Ingredients | % | kg |
|---|---|---|
| Cocoa mass | 20,45 | 36,81 |
| Cocoa butter | 20,07 | 36,13 |
| Oat chocolate crumb | 59,31 | 106,76 |
| Vanilla powder | 0,03 | 0,05 |
| Lecithin | 0,14 | 0,25 |
| Total | 100,00 | 180,00 |

It is understood that the above mentioned amounts of ingredients may vary depending on the desired flavour and nutritional profile.

In this example chocolate was refined with a three roll refiner and conched in traditional way. It is also possible to use other refining and conching methods like refining conches, ball mill refining etc.

All the ingredients except lecithin and part of cocoa butter were mixed, warmed up to 50-55 °C, and pre-ground with a three-roll refiner at a pressure of about 6 bar. More cocoa butter was added and the mixture was fine ground with the three-roll refiner at a pressure of about 14 bar. The mixture was subjected to traditional conching at about 55°C for 8-12 hours. Next, lecithin and rest of cocoa butter were added with mixing. The obtained mixture was allowed to rest for 24 h.

The oat crumb chocolate from the three roll refining process had a fat content of 35.21 % (NIR), a Casson plastic viscosity of 2.335 Pas, a Casson yield value of 3.243 Pa, a constant speed (16.2 rpm) of 3930 mPas (all three measured with a Haake VT550 viscometer), a particle size of 27.8 µm (Malvern D 0.9), and a water content of 1.4 % (NIR).

### Comparative example

For comparison, oat chocolate was produced with untreated oat flour using the same recipe and process that are described above for oat crumb chocolate. Thus the roasting process was excluded but the refining and conching processes were the same.

The basic oat flour chocolate from the roll refining process had a fat content of 37.06 % (NIR), a Casson plastic viscosity of 1.35 Pas, a Casson yield value of 2.048 Pa, a constant speed (16.2 rpm) of 2324 mPas (all three measured with a Haake VT550 viscometer), a particle size of 28.401 µm (Malvern D 0.9), and a water content of 1.54 % (NIR).

It was possible to produce chocolate from oat-based crumb as well as from basic oat flour. However, there was a huge difference in the flavour profile and in the structure of the chocolate.

Basic oat flour chocolate had a strong grain taste, which was released after the chocolate melting had started. Oat flour taste was dominating in flavour profile and in the after-taste. It was more like dark chocolate type. The melting profile /ability was quick melting and a little bit floury. After longer shelf life it was found to have a bitter after-taste maybe due to the fat oxidation products.

Oat crumb chocolate was creamier and had a strong caramelized flavour note. Oat crumb chocolate had more "milk chocolate" like flavours and the flavour profile was constant. In addition, the structure was improved having creamier and long-lasting melting profile due to the crumb process. Long lasting effect in the mouthfeel was also described in the analyses. Oat crumb chocolate had a mild grain taste, but it was not dominating like in the basic oat flour version. After-taste was good and caramelized. No off-flavour was detected after one-year shelf life. Overall aroma intensity was higher in crumb chocolate due to the Maillard reaction components from crumb roasting process.

### Example 3. Preparation of rye-based crumb (not according to the invention)

A grain-based crumb was prepared starting from whole grain rye flour. Whole grain rye flour was chosen as it seemed to be most challenging due to the high fibre content. It was important to see how this affected the crumb roasting process as well as the chocolate making process. Rye flour fibre content was 20% whereas it had been 8% in the oat flour. The ingredients of rye chocolate crumb are given in Table 3.

**Table 3. Ingredients of rye-based crumb**

| Ingredients | kg | wt-% | water % | fat % | dry crumb | dry crumb % | chocolate (g) |
|---|---|---|---|---|---|---|---|
| Whole grain rye flour* | 1.230 | 24.758 | 1.981 | 0.569 | 24.758 | 28.549 | 846.768 |
| Granulated sugar | 2.460 | 49.517 | | | 49.517 | 57.098 | 1693.535 |
| Water | 0.759 | 15.278 | 15.278 | | 2.000 | 2.306 | 68.402 |
| Malt grains | 0.150 | 3.019 | | | 3.019 | 3.482 | 103.264 |
| Cocoa mass | 0.369 | 7.428 | | 4.457 | 7.428 | 8.565 | 254.030 |
| total | 4.968 | 100,000 | 17.258 | 5.026 | 86.722 | 100.000 | 2966.000 |

| | | | | | | | |
|---|---|---|---|---|---|---|---|
| *fat 2.3%, carbohydrates 57% (sugar 1.3%), fiber 20%, protein 10% | | | | | | | |

Water and sugar were added to a suitable crumb cooker, provided with means for mixing, homogenizing, steam heating and vacumation, and mixed at a temperature of 70-90°C for 5 minutes. Some of the sugar dissolves into water. Rye flour and grinded malt grains were added. Roasting step was carried out for 30-40 minutes with mixing in an open cooker with a steam pressure of 2 bar. The end temperature of the product was 95°C.

Next, heating was stopped and cocoa mass was added to the liquid mixture while mixing. The obtained mixture was subjected to vacumation without heating or cooling for 10-15 minutes. Vacumation pressure was approximately -900 mbar and the crumb temperature at the end of vacumation about 70-80°C. During vacumation, a phase change from liquid to powder form took place. After vacumation, the obtained rye crumb was ground. The final crumb had a water content of 2.0% (KF).

It was found that it was fully possible to process rye flour to obtain rye-based crumb. The obtained rye crumb had the desired properties and could be refined and produced to chocolate tablets, as shown in the following example.

### Example 4. Rye chocolate made from rye-based crumb (not according to the invention)

The rye-based crumb of Example 3 was used in the manufacture of rye chocolate. The ingredients of rye chocolate are given in Table 4.

**Table 4. Ingredients of rye chocolate**

| Ingredients | g | wt-% | fat % |
|---|---|---|---|
| Cocoa mass | 350.00 | 8.30 | 4.98 |
| Cocoa butter | 960.00 | 22.77 | 22.77 |
| Rye crumb total 2966 g | | | |
| Granulated sugar | 1693.54 | 40.16 | |
| Whole grain rye flour | 846.77 | 20.08 | 0.46 |
| Cocoa mass | 254.03 | 6.02 | 3.61 |
| Malt grains | 103.264 | 2.45 | |
| Vanilla | 2 | 0.05 | |
| Soya lecithin | 7 | 0.17 | |
| total | 4216.60 | 100.00 | 31.82 |

All the ingredients except lecithin and part of cocoa butter were mixed, warmed up to 50-55 °C, and pre-ground with a three-roll refiner. More cocoa butter was added and the mixture was fine ground. The mixture was subjected to traditional conching at about 55°C for 8-12 hours. Next, lecithin and rest of cocoa butter were added with mixing. The obtained mixture was allowed to rest for 24 h. Finally, the obtained mixture was tempered and used as desired.

The obtained rye chocolate had a fat content of 33.7 % (NIR), a Casson plastic viscosity of 4.562 Pas, a Casson yield value of 1.065 Pas, a constant speed (16.2 rpm) of 5823 mPas (all three measured with a Haake VT550 viscometer), a particle size (Malvern D0.9) of 33.7 µm, and a water content of 0.37% (KF).

The obtained rye-crumb based chocolate had a mild malty and toasted rye bread flavour combined with typical chocolate flavour. Due to the high fibre content, the structure was little short. However, the chocolate was like normal chocolate and could be used in chocolate tablets and other products.

### Example 5. Fermented oat-based crumb and chocolate made thereof

The aim was to further develop the grain base flavour by fermentation of grain material before crumb preparation. The ingredients of fermented oat base are given in Table 5.

**Table 5. Ingredients of fermented oat base**

| **Fermented oat base** | | | |
|---|---|---|---|
| Raw material | kg | weight-% | dry matter |
| Oat flour | 0,180 | 9,703 | 9,703 |
| Granulated sugar | 0,170 | 9,164 | 9,164 |
| Water | 1,500 | 80,859 | |
| Starter | 0,005 | 0,274 | |
| | 1,855 | 100,000 | 18,867 |

First, boiling water (100°C) was poured to a mixture of oat flour and granulated sugar and the product was kept at said temperature for about 15 minutes. The mixture had a pH of about 6.5. The obtained oat base mixture was cooled down to 44°C and a starter was added.

The oat base mixture was fermented at 41°C for 16.5 h. After fermentation, the mixture had a pudding-like structure and a pH value of 4.1.

### Crumb preparation

The fermented oat base and granulated sugar were added into a crumb cooker. Some extra oat flour was added to increase the dry content. Roasting was carried out at a pH 5.0 and a steam pressure of 2-3 bar for 30 minutes.

After roasting, cocoa mass was added to the liquid mixture. Due to the high evaporation of the water during roasting, some water was also added. Vacumation was carried out for 15 minutes to obtain a powdered mixture (crumb). Phase transition from liquid to powder started to take place during the first minutes of vacumation. After vacumation the crumb was ground into a fine powder. The final crumb had a water content of 1.5-2% (KF).

The fermented oat crumb had even milder grainy flavour profile than the oat crumb produced without fermentation of oat base. A stronger caramel like flavour compared to the oat crumb without fermentation was noticed, probably due to the higher content of reaction components from the fermentation process.

The ingredients of the fermented oat crumb and the chocolate prepared from fermented oat crumb are given in Table 6. The preparation of chocolate is described below.

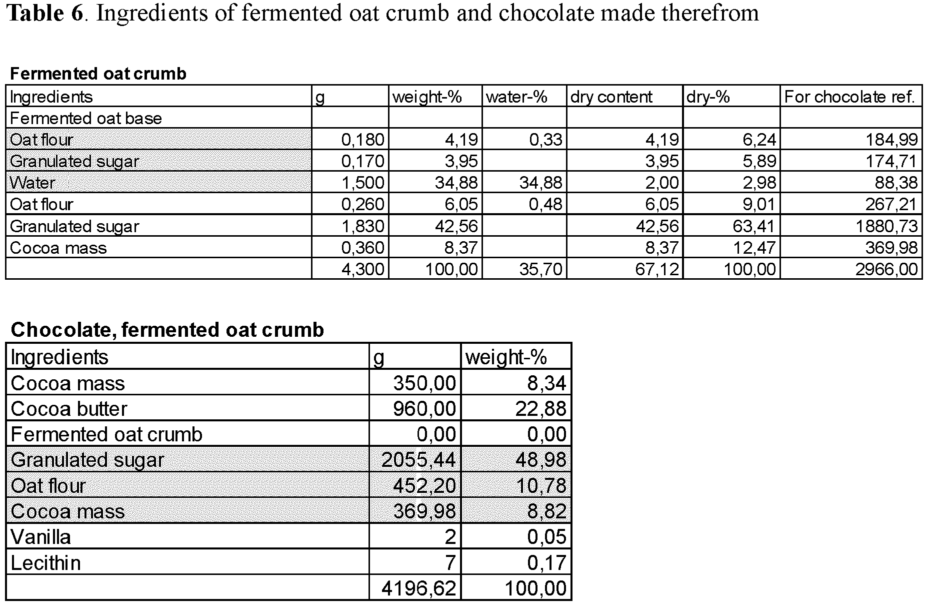

### Chocolate preparation

The fermented oat-based crumb was used in the manufacture chocolate by using roll refining process and traditional conching. The manufacture followed the procedure described in Example 2.

The obtained chocolate made from fermented oat-based crumb had a fat content of 34 % (NIR), a Casson plastic viscosity of 4.066 Pas, a Casson yield value of 2.622 Pas, a constant speed (16.2 rpm) of 5958 mPas (all three measured with a Haake VT550 viscometer), a particle size (Malvern D0.9) of 27.8 µm, and a water content of 0.32 % (KF).

### Example 6. Enzymatic treatment (glucoamylases and endoamylases) in the manufacture of oat-based crumb (not according to the invention)

In this experiment enzymes were used for lowering starch viscosity of oat base during the heating process. The aim was also to increase the level of reducing sugars to obtain more reactive components for Maillard reaction.

The enzymes used included endo-amylase that hydrolyzes (1,4)-alpha-D-glucosidic linkages in starch polysaccharides and L-glucoamylase that hydrolyzes (1,4)- and (1,6)-alpha-D-glucosidic linkages at the non-reducing ends of polysaccharides.

A 20% solution of oat powder in water was prepared. The dry matter content of the mixture was 17.52%. Temperature of the mixture was 60 °C when endo-amylase in an amount of 0.20% based on the weight of oat powder was added. After approximately 15 minutes, L-glucoamylase in an amount of 0.30% based on the weight of oat powder was added. After about 1.5 hours from adding the endoamylase, the mixture was centrifuged and an enzyme treated oat base (resembling oat milk) was obtained. The tests were also done without centrifugation.

Production of crumb from the enzyme treated oat base followed basically the procedure given in Example 1, but no additional water was needed in the first step, where sugar and the enzyme treated oat base were added into a crumb cooker. The mixture was roasted for 75 min under steam pressure of 1-2 bar, ending at a temperature of 97.5°C. A lower temperature compared to the process of the invention which starts from oat flour can be applied, since enzyme treatment provides more reacting components for Maillard reactions, which thus proceed more easily. The ingredients of oat crumb prepared from the enzyme treated oat base are given in Table 7.

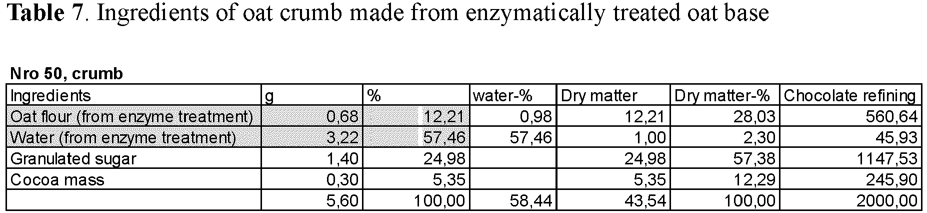

After roasting, cocoa mass was added and the syrup-like mixture was subjected to vacumation for 30 minutes at a pressure of -800 - -950 mbar. The obtained crumb was grinded into fine powder and used in the manufacture of chocolate.

### Chocolate preparation

The crumb prepared from enzyme-treated oat base was used in the manufacture of chocolate by using roll refining process and traditional conching. The manufacture followed the procedure described in Example 2.

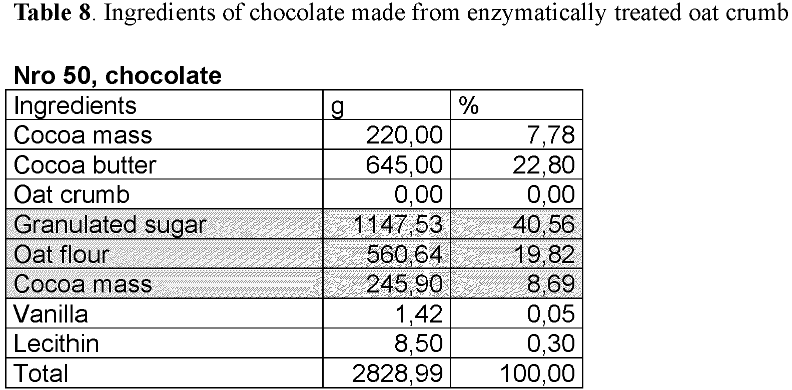

All the ingredients except lecithin and part of cocoa butter were mixed, warmed up to 50-55 °C, and pre-ground with a three-roll refiner. More cocoa butter was added and the mixture was fine ground. The mixture was subjected to traditional conching at about 55°C for 8-12 hours. Next, lecithin and rest of cocoa butter were added with mixing. The obtained mixture was allowed to rest for 24 h. Finally, the obtained mixture was tempered.

The chocolate obtained with centrifugation of the enzyme-treated oat base had a fat content of 33.7 % (NIR), a Casson plastic viscosity of 2.532 Pa, a Casson yield value of 3.237 Pa, a constant speed (16.2 rpm) of 4161 mPas, particle size (Malvern D0.9) of 28.7 µm, and a water content of 0.53 % (KF).

The chocolate obtained without centrifugation of the enzyme-treated oat base had a fat content of 32.1% (NIR), a Casson plastic viscosity of 3.064 Pa, a Casson yield value of 3.735 Pa, a constant speed (16.2 rpm) of 5003 mPas and particle size (Malvern D0.9) of 34.4 µm.

### Results

Both the crumb process starting from the enzyme treated oat base and the subsequent chocolate making process succeeded well. In the crumb process, endoamylase decreased viscosity during the heating process. L-glucoamylase increased the level of glucose from the oat base. It was possible to make oat crumb from "fresh oat milk", where the enzyme treated oat base was centrifuged. Also the enzyme treated base without centrifugation worked well. However, in both cases the crumb roasting time was longer due to the high water content compared to the crumb process of Example 1, wherein oat powder was used as starting material.

As understood, the process can be optimized by increasing the dry matter content of the oat base, which will shorten the crumb cooking process. Further, enzyme levels can be optimized and the level of glucose decreased if strong flavours are not desired. It is possible to adjust the flavour properties by increasing the amount of reducing sugars.

It was found that rheological properties were improved when the insoluble part was centrifuged out. Even when the particle-size was lower in the chocolate prepared from the centrifuged sample, the chocolate had a lower Casson-viscosity. Both Casson plastic viscosity and Casson yield values were typical for moulding chocolates.

### Example 7. Enzymatic treatment (β-glucanases) in the manufacture of grain-based crumb

Beta glucanase enzyme was used to decrease the possible stickiness of an oat-based crumb due to the beta glucan naturally present in oat. The aim was to improve the mouthfeel and melting properties in oat based vegan chocolate.

The enzyme used was a beta glucanase with cellulose and xylanase activities. Beta glucanase activity was 12,500 U/g and the dosing of the enzyme 0.12% based on the amount oat powder. The amounts of the ingredients are given in Table 9 below.

**Table 9. Ingredients of oat crumb manufactured from betaglucanase treated oat base**

| ingredients | Input (kg) | % | Water (%) | Dry content (%) | to refining |
|---|---|---|---|---|---|
| Oat powder | 3,35 | 18,59 | 1,49 | 17,10 | 20,02 |
| Granulated sugar | 12,55 | 69,72 | 0,00 | 69,72 | 81,62 |
| Water | 1,32 | 7,32 | 7,32 | 0,00 | 0,00 |
| Cocoa butter | 0,79 | 4,37 | 0,00 | 4,37 | 5,11 |
| Total | 18,00 | 100,00 | 8,81 | 91,19 | 106,76 |

First, water (90%) and sugar were added into reactor and warmed up. The enzyme was mixed into water (10%) and added into war sugar-slurry. After this the oat powder was added. Reaction time was 120 minutes with previous parameters so that mass temperature was optimal for enzyme reaction (60-65°C).

Next, the reaction was slowly stopped by starting the roasting phase. The mixture was roasted for 60 minutes at a mixing speed of 50 rpm in a crumb cooker with a water circulation of 115°C and mass temperature of 104 °C at the end of roasting.

After roasting, cocoa butter was added and vacumation was started. Vacumation time was 30 minutes, with a mixing speed of 60 rpm and water circulation of 50°C. The crumb was grinded into fine powder and used in the manufacture of chocolate.

### Chocolate preparation

The crumb prepared from the beta glucanase treated oat base was used in the manufacture of chocolate,. Briefly, dry conching was started in a heating and mixing reactor. Chocolate crumb, cocoa mass and some of the cocoa butter were added into the reactor. Temperature was 50-60°C and conching time 60-120 minutes.

**Table 10. Ingredients of chocolate made from beta glucanase treated oat crumb**

| Ingredients | % | kg |
|---|---|---|
| Cocoa mass | 20,45 | 36,81 |
| Cocoa butter | 20,07 | 36,13 |
| Oat chocolate crumb | 59,31 | 106,76 |
| Vanilla powder | 0,03 | 0,05 |
| Lecithin | 0,14 | 0,25 |
| Total | 100,00 | 180,00 |

After conching, vanilla, lecithin and rest of the cocoa butter were added. The conched mass was taken out of the reactor. Refining was started in a ball mill refiner. Mass was circulated until a desired particle size was reached. Finally, chocolate was tempered and moulded to chocolate tablets.

The resulting chocolate had a fat content of 36.5 % (calculated), a Casson plastic viscosity of 1.787 Pa, a Casson yield value of 6.683 Pa, a constant speed (16.2 rpm) of 3985 mPas, all measured with a Haake VT550 viscometer, and a particle size of 20 µm.

It was possible to provide an effect on the structure of the chocolate by treating the oat base with beta glucanase. Chocolate was analysed in the sensory analyses and compared to basic oat crumb chocolate without any enzyme treatment (Example 1). Chocolate mouthfeel was changed by beta glucanase treatment. Chocolate melting was increased, and stickiness and fatty mouthfeel were decreased. However, these sensory properties can have positive or negative effect depending on the application of use.

### Example 8. Grain-based chocolate crumb filling (not according to the invention)

Oat-based chocolate crumb was prepared and used for non-dairy filling applications, such as pralines and biscuits.

Preparation of oat-based chocolate crumb followed the procedure described in Example 1. The obtained oat chocolate crumb and other ingredients of the filling, in particular soft filling fat, e.g palm based fat, and optional flavour and nutritional agents, were subjected to a combined refining and conching process in a ball mill. Combined refining and conching process (refining conche) was continued at a temperature of 55-60 °C for 10 hours. The refining and conching time can be further adjusted according to the desired rheological parameters, flavour and particle size. The obtained chocolate crumb filling typically had a particle size of 23-30 µm and a fat content of 35-36%. It was successfully tested as a filling in pralines and biscuits.

### Example 9. Sensory analysis of chocolate samples

Two chocolate samples were taken to external sensory analysis: Chocolate A contained non-processed oat powder; Chocolate B contained oat-based crumb prepared by the method of the invention starting from fermented oat base. Preparation of chocolate masses and the recipes were identical and the amounts of oat-based material were comparable. The amount of cocoa was in between normal type of milk chocolate and dark chocolate having 40% cocoa content.

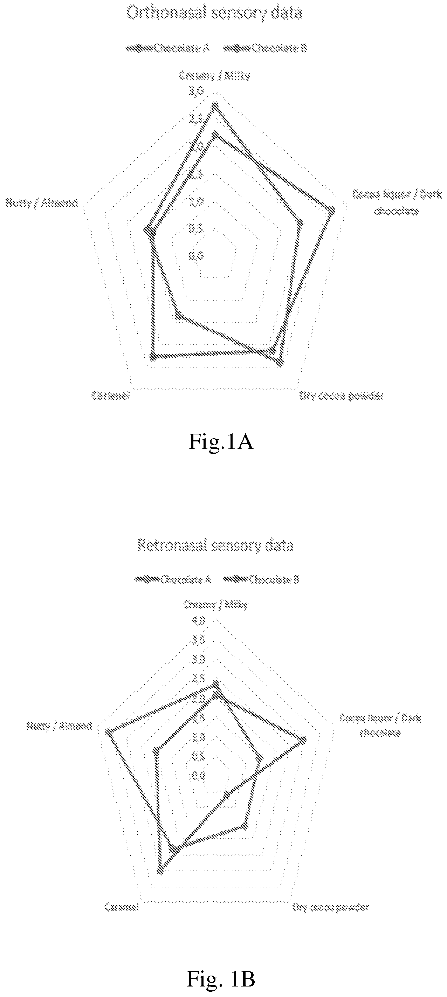

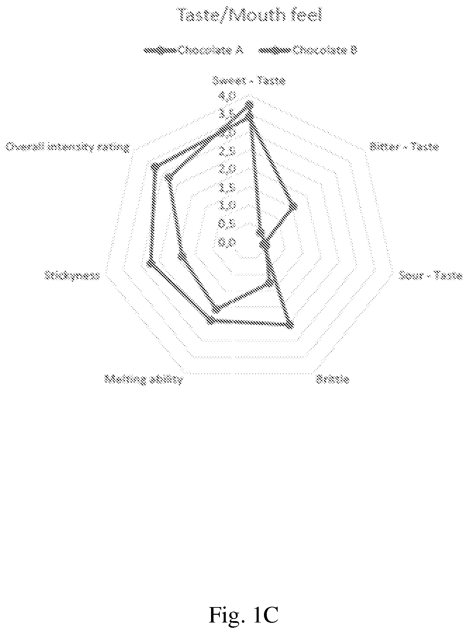

Descriptive sensory sample evaluation was undertaken by a sensory expert panel of 5 panellists. The attributes for orthonasal aroma impression (odour perception through nasal passage), retronasal aroma impression (odour perception through mouth cavity) and taste/mouth feel were evaluated under scale 0-5. The results are illustrated in Figure 1A (orthonasal), Figure 1B (retronasal), and Figure 1C (taste/mouth feel).

Orthonasal odour impression of Chocolate A was perceived to be somewhat more milky in comparison to Chocolate B. As illustrated in Fig. 1A, Chocolate B had dark chocolate /cocoa and caramel notes.

As can be seen in Fig. 1B, retronasal odour impression of Chocolate A had very low dark chocolate/cocoa impression but distinct nutty/almond notes. Chocolate B had more dark chocolate/cocoa and caramel notes, in line with its orthonasal impression.

The distinct nutty/almond notes in Chocolate A correlate with roasted cereal. As said notes are remarkably smaller in Chocolate B, the process of the present invention enables weakening of the cereal taste typical to oats.

The attributes for taste (sweet/bitter/sour) and mouthfeel (brittleness, melting ability and stickiness) are illustrated in Figure 1C. Both chocolates were found to be equally sweet in taste, while Chocolate B was perceived to be more bitter. The melting ability and mouthfeel on the palate of Chocolate B was long-lasting. Overall intensity of Chocolate B was rated higher.

### Example 10. Aroma analysis by GC-O, quantification of chosen aroma compounds by GC-MS, and statistical evaluation and linkage of sensory and analytical data

Gas chromatography-olfractometry (GC-O) analysis was performed on MeOH/water extract of the samples. The compounds were separated on the GC column and eluted partly to a sniffing port and partly to a detector. At the sniffing port the aroma active compounds could be sniffed and evaluated. The potent odor compounds contributing to the profile were picked from the detection results and separated into identified and unknown aroma compounds. The identified aroma compounds are compounds typically present in chocolate. The unknown aroma compounds are compounds present in chocolate but not yet identified. The reason for non-identification was that the outside analysing service was not yet informed of the raw material base of the samples.

Both chocolate samples showed a relatively high amount of said "unknown" aroma compounds. Chocolate B had more potent unknown sniffing impressions compared to Chocolate B. Based on sensory attributes, availability of reference compounds and MS signals, 26 more potent aroma compounds were chosen to be quantified.

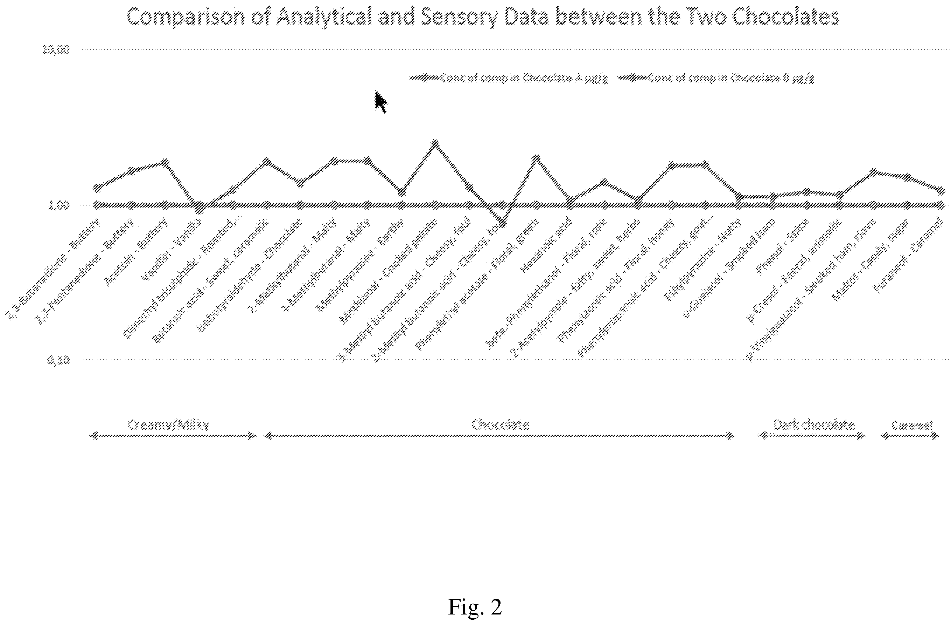

The quantities of the 26 chosen aroma compounds in the two chocolates were compared. Chocolate A was selected as the reference level (index 1.00). The comparison of analytical and sensory data between the two chocolates is illustrated in Figure 2. The components were classified in 4 groups: Creamy/milky, Chocolate, Dark chocolate, and Caramel.

From the data linkage of the analytical and sensory data it can be seen that Chocolate B is more intense in almost all of the monitored aroma compounds. This result confirms the earlier sensory evaluation: the process of the present invention intensifies the aroma compounds that are typical to Maillard reactions. Moreover, the process reduces the cereal taste otherwise present in grain-based chocolates.

### Example 11. Analysis of chocolate samples (DoE experiments, not according to the invention)

A DoE experiment was performed to manufacture non-dairy grain-based crumbs by using the method of the present disclosure. The crumbs were used in the manufacture of vegan chocolates. A reference chocolate was prepared by using the same chocolate recipe but without processing the grain raw material according to the method of the present disclosure. The aroma and sensory profile of the chocolate samples were analyzed.

The crumbs were prepared by using oat as raw material and by varying the process parameters as follows:
- Roasting time 30-90 minutes
- Heating temperature 100-140 °C
- Mixing 30-100 rpm
- Amount of water 8-15 %
- Additional parameters: effect of pH and fermentation (acidic/alkaline), enzymatic treatment

### Sensory analysis

Descriptive sensory analysis was performed by a sensory expert panel. First, a list of descriptive characters was developed. Intensities of different sensory attributes were rated on a scale of 0-5 on different days and at different day times.

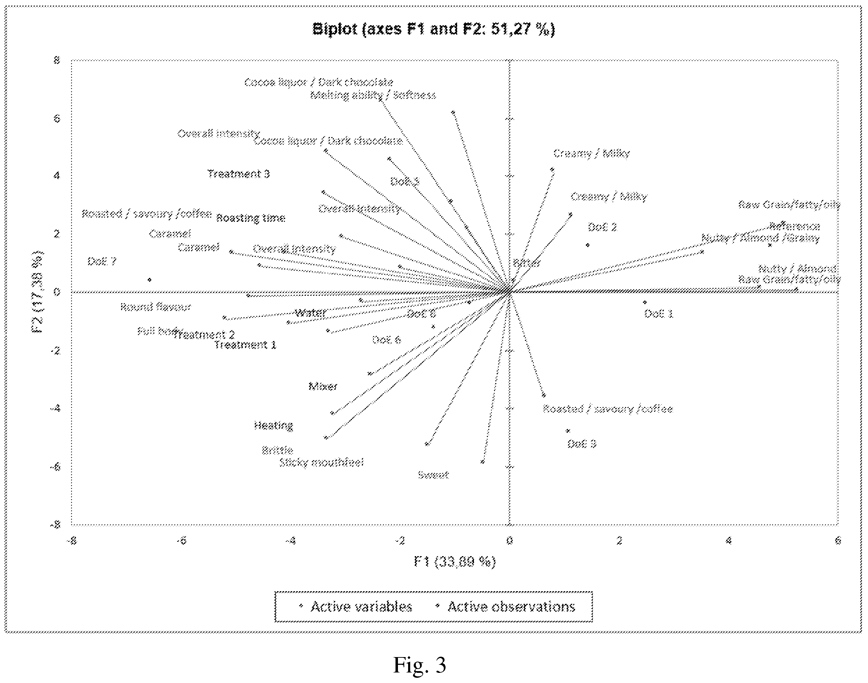

Figure 3 illustrates Principal Component Analysis of sensory attributes and processing parameters. Sensory analysis showed a grouping of different samples roughly into 3 different clusters:
- Cluster 1: Reference - high raw grainy, nutty attributes; DoE1 and DoE2 - lower raw grainy and nutty attributes
- Cluster 2: DoEs 3, 5, 6 and 8 - more balanced, lower in raw grainy attributes
- Cluster 3: DoE 7: outstanding with high caramel-like and roasted notes, giving full body impression

Based on the sensory analysis, the method of the present disclosure has a big influence on the sensory profile of the various chocolate samples, decreasing raw grainy and nutty/almond/grainy attributes and thus decreasing the grainy flavor compared to Reference. Representative examples (Reference, DoE 1, DoE 3 and DoE 7) from different clusters were chosen for further analysis.

### Analysis of aroma compounds

Samples for aroma analysis were prepared as follows: 30g of chocolate sample + 60g of warm water were mixed to make a chocolate slurry. Chocolate slurry was introduced in Soxhlet at 60°C, 150mbar for 6h using 100mL methanol (MeOH). MeOH phase was collected and extracted with dichloromethane (DCM). DCM phase was centrifuged at 13000 rpm for 15min at 0°C to obtain a clear DCM phase. It was then dried with 10g of Na₂SO₄. 1 mL for a dilute sample analysis were removed and the rest of the sample was concentrated to about 4mL. Quantification of selected aroma compounds was performed by Standard Addition method.

Aroma compounds that are known drivers for sensory attributes in chocolate and in cereals were selected for analysis based on literature and included 3-methyl-1-butanol, 1-pentanol, 1-hexanol, hexanal, 1-octen-3-ol, nonanal, decanal, trans,trans-2,6-nonadienal, trans-2,cis-6-nonadienal, trans,trans-2,4-nonadienal, trans,trans-2,4-decadienal, 2,4,6-nonatrienal. Aroma compounds which significantly increase cereal sensory attributes when their concentration increases typically include 3-methyl butanoic acid, 2-methyl butanoic acid, hexanoic acid, 1-hexanol, 1-pentanol, 1-octen-3-ol and o-guaiacol, particularly 2-methyl butanoic acid, 1-pentanol, 1-hexanol and o-guaiacol.

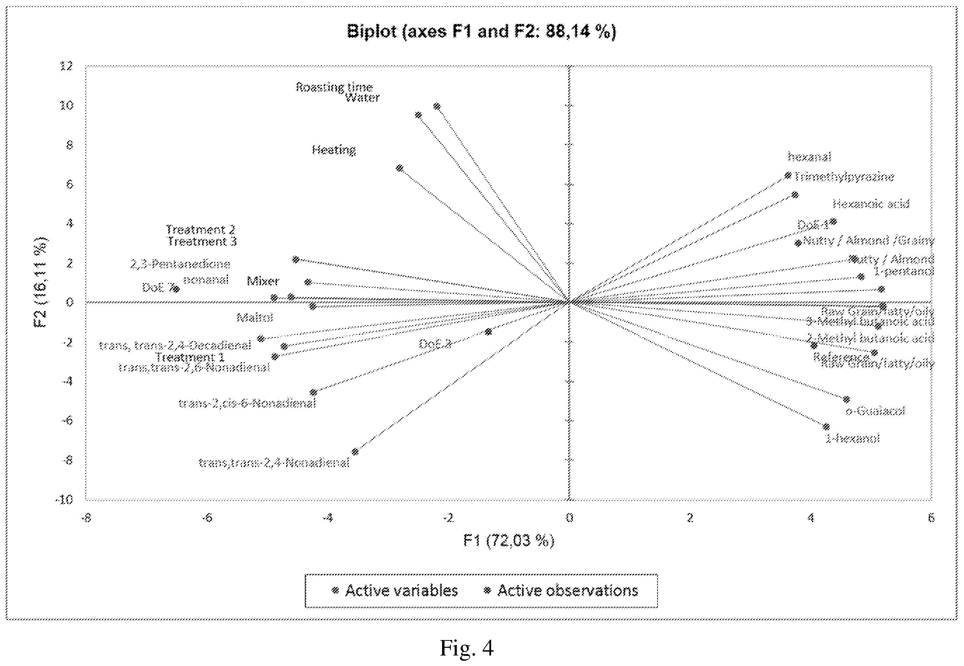

Figure 4 illustrates Principal Component Analysis of cereal sensory attributes vs. aroma compounds, which influence cereal attributes vs. processing parameters. Figure 4 also shows the effect of some optional additional treatments on the flavor profile (treatment 1 - fermenting (acidic conditions); treatment 2 - alkaline conditions; treatment 3 - enzyme treatment (amylases)).

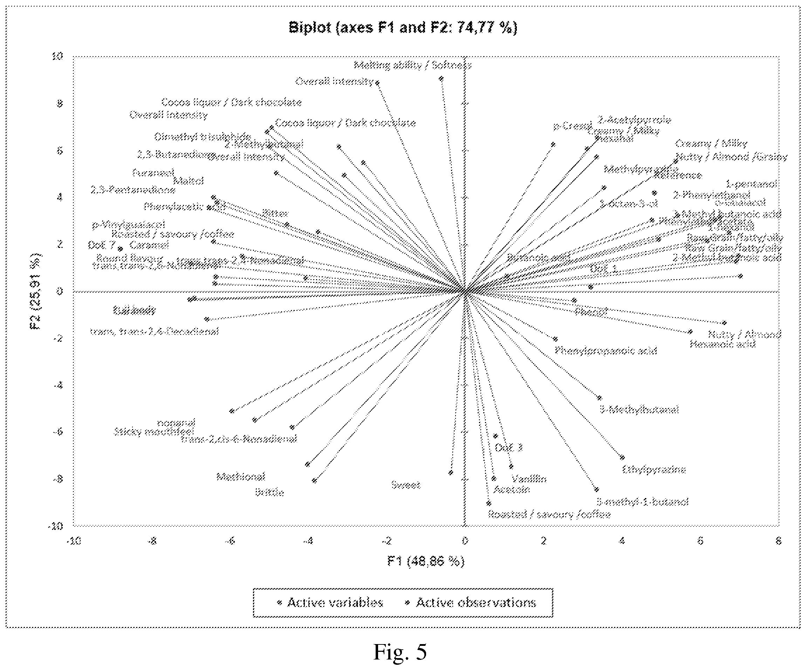

Figure 5 illustrates Principal Component Analysis based on both sensory and analytical data.

From the results it can be seen that the method of the present disclosure is effective in decreasing the level of grainy flavours of grain-based products containing grain-based crumbs prepared by the method of the present disclosure. In particular, the methods of the present disclosure effectively reduce such cereal sensory attributes as nutty /grainy and raw grain/fatty/oily. Typically this can be seen as a decrease of concentrations of such aroma compounds as 3-methyl butanoic acid, 2-methyl butanoic acid, hexanoic acid, 1- pentanol and o-guaiacol, in particular 2-methyl butanoic acid, 1-pentanol and o-guaiacol.

At the same time the methods of the present disclosure may increase the concentrations of aroma compounds, which negatively correlate to the above mentioned cereal sensory attributes. Thus the methods of the present disclosure may increase the concentrations of aroma compounds such as 2,3-pentanedione, maltol, nonanal, trans,trans-2,6-nonadienal, trans-2,cis-6-nonadienal, trans,trans-2,4-decadienal, in particular nonanal. Several of the latter compounds, with the addition of furaneol, are also positive drivers for caramel attributes. It is thus also possible to increase caramel-like flavours while also reducing grainy flavours.

Depending on the intended use of grain-based crumb, it is thus possible to obtain desired flavor levels and flavor properties by adjusting the conditions and reaction components used, such as the applied temperature, the amount of reducing sugars, different raw materials, process times, and pH values according to the desired output.

### INDUSTRIAL APPLICABILITY

At least some embodiments of the present invention find industrial application in food industry, particularly in the manufacture of confectionery products, sweet baked goods, drinks, spreadings and snack products. The methods of the invention find use also in production of any grain-based products, wherein decrease of grainy flavours is desired.

### ACRONYMS LIST

- CBE: Cocoa butter equivalent
- GC-MS: Gas chromatography-mass spectrometry
- GC-O: Gas chromatography-olfractometry
- KF: Karl Fischer titration
- NIR: Near Infrared spectroscopy

### CITATION LIST

Patent Literature
US 20150342214 A1
US 4,356,209
US 6,521,273
WO 8002636 A1
US 2,887,386
US2019216103A1
US2016021899A1

## Claims

1. A method for preparing non-dairy, grain-based crumb, the method comprising the steps of:
a) providing a mixture of sugar and grain-based material in aqueous medium to obtain an aqueous mixture of sugar and grain-based material;
b) roasting the aqueous mixture of sugar and grain-based material;
c) adding and mixing cocoa mass, cocoa powder, cocoa butter or a mixture of different cocoa components to the aqueous mixture of sugar and grain-based material before, during or subsequent to roasting;
d) optionally adding and mixing vegetable fat to the aqueous mixture of sugar and grain-based material before, during or subsequent to roasting;
e) subjecting the roasted mixture to evaporation to obtain grain-based crumb; and
f) optionally grinding the grain-based crumb to pieces of desired size,
**characterised in that** the grain-based material is oat powder or oat flour, which is fermented or enzymatically treated with beta glucanase enzymes.

2. The method according to claim 1, wherein step a) comprises adding sugar to the aqueous medium, or providing sugar to the aqueous medium by the action of enzymes.

3. The method according to any one of the preceding claims, wherein the dry matter content of the aqueous mixture during roasting is 40-98%, preferably 40-95 %, more preferably 60-90 %, or still more preferably 80-90 %.

4. The method according to any one of the preceding claims, wherein step (b) comprises roasting the aqueous mixture of sugar and grain-based material for a roasting time, which is preferably at least 10 minutes, more preferably at least 20 minutes, for example 20-120 minutes or 30-60 minutes, at a roasting temperature, which at the beginning of roasting is the boiling point temperature of the mixture at an atmospheric pressure.

5. The method according to any of the preceding claims, which comprises the step of adding and mixing vegetable fat to the aqueous mixture of sugar and grain-based material, wherein the vegetable fat is preferably selected from cocoa butter, cocoa butter equivalent, and a vegetable filling fat, such as vegetable filling fat from nuts, coconut or almonds, for example in the form of milk, paste, powder, flakes or pieces, preferably cocoa butter.

6. The method according to any of the preceding claims, which comprises the step of adding and mixing cocoa mass, cocoa powder, cocoa butter or a mixture of different cocoa components to the aqueous mixture of sugar and grain-based material, which optinally comprises also vegetable fat, after roasting and before evaporation.

7. The method according to any of the preceding claims, wherein step (e) comprises vacuum evaporation or thermal evaporation, preferably vacuum evaporation at a pressure of -1000 - -800 mbar (-100 - -80 kPa) for a vacuum evaporation time of at least 10 minutes, more preferably for a vacuum evaporation time of 10-40 minutes.

8. The method according to any one of the preceding claims, wherein the obtained grain-based crumb has an end water content of 0.5-5 % by weight, preferably 1-5%, more preferably 1-4%, even more preferably 1-3% by weight.

9. The method according to any one of the preceding claims, wherein at least one enzyme is added to the mixture of step (a).

10. The method according to any one of the preceding claims, which further comprises the step of adding vegetable fat to the grain-based crumb to obtain a slurry, which is wet-grinded and used as pumpable raw material in the manufacture of confectionery products, preferably chocolate or chocolate fillings.

11. The method according to any one of the preceding claims for preparing oat-based crumb, wherein the method comprises the steps of
a) providing an aqueous mixture of sugar and oat powder or oat flour, wherein the oat powder or oat flour is fermented or enzymatically treated with beta glucanase enzymes;
b) roasting the aqueous mixture of sugar and oat powder or oat flour, preferably at a temperature of 90-140 °C or 100-120°C preferably for at least 10-30 minutes, to obtain a roasted liquid mixture;
c) adding and mixing cocoa powder, cocoa mass, cocoa butter or any combination thereof and optionally vegetable fat to the aqueous mixture of sugar and oat powder or oat flour before, during or subsequent to roasting, preferably before or during roasting;
d) subjecting the roasted liquid mixture to vacuum evaporation, preferably at a pressure of -100 - -80 kPa, to obtain a phase change of the roasted mixture from liquid to powder form; and
e) optionally grinding the vacuum evaporated powder to obtain oat-based crumb of desired size.

12. The method according to claim 1 for preparing oat-based crumb, comprising the steps of
a) providing a mixture of sugar and oat powder or oat flour, wherein the oat powder or oat flour is fermented or enzymatically treated with beta glucanase enzymes, in water to obtain an aqueous mixture of sugar and oat powder or oat flour;
b) roasting the aqueous mixture of sugar and oat powder or oat flour, preferably at a temperature of 90-140 °C for at least 10-30 minutes, to obtain a roasted liquid mixture;
c) adding and mixing cocoa mass, cocoa powder or both to the mixture before, during or subsequent to roasting;
d) adding cocoa butter before, during or subsequent to roasting;
e) subjecting the roasted liquid mixture to vacuum evaporation to obtain a phase change of the roasted mixture from liquid to powder form; and
f) optionally grinding the vacuum evaporated powder to obtain oat-based crumb of desired size.

13. The method according to any one of the preceding claims, which further comprises the step of using the obtained grain-based crumb in the manufacture of non-dairy confectionery and bakery products, in particular chocolate.

14. A non-dairy crumb, **characterized in that** it is obtainable by the method according to any one of claims 1 to 12 and comprises a roasted mixture of sugar and oat powder or oat flour, which is fermented or enzymatically treated with beta glucanase enzymes, with cocoa raw material, wherein the cocoa raw material is selected from cocoa mass, cocoa powder, cocoa butter and any combination thereof, preferably together with vegetable fat, wherein the crumb has a water content of 0.5-5 % by weight, typically 1-5%, preferably 1-4%, more preferably 1-3% by weight, and wherein the grainy flavour of the grain flour or grain powder is decreased compared to unroasted grain flour or grain powder.

15. The non-dairy crumb according to claim 14, which comprises a roasted mixture of saccharose or saccharose/fructose and oat powder or oat flour, which is fermented or enzymatically treated with beta glucanase enzymes, together with cocoa butter, preferably a roasted mixture of saccharose and oat powder or oat flour together with cocoa butter.

16. A food product containing the crumb according to claim 14 or 15, wherein the food product is selected from the group consisting of confectionery products, sweet baked products, drinks, spreadings and snack products, and wherein the food product preferably is a confectionery product or sweet bakery product selected from the group consisting of chocolate type products, filled chocolate type products, such as a chocolate praline, chocolate tablets, chocolate coated fillings, chocolate coated bars, biscuit type products, fillings for biscuit type products, chocolate coated cakes, chocolate coated inclusions, chocolate coated or filled puffed cereals, cereal bars with inclusions or coated with chocolate, and filled sweet bakery products like croissants and tartes.

17. Use of the crumb according to claim 14 or 15 in the manufacture of food products, preferably confectionery products or sweet bakery products.

## Patentansprüche

1. Verfahren zur Herstellung von milchfreiem, getreidebasiertem Crumb für Schokolade, wobei das Verfahren die Schritte umfasst zum:
a) Bereitstellen einer Mischung aus Zucker und getreidebasiertem Material in wässrigem Medium, um eine wässrigen Mischung aus Zucker und getreidebasiertem Material zu erhalten;
b) Rösten der wässrigen Mischung aus Zucker und getreidebasiertem Material;
c) Zugeben und Mischen von Kakaomasse, Kakaopulver, Kakaobutter oder einer Mischung aus verschiedenen Kakaobestandteilen zur wässrigen Mischung aus Zucker und getreidebasiertem Material vor, während oder nach dem Rösten;
d) optional Zugeben und Mischen von Pflanzenfett zur wässrigen Mischung aus Zucker und getreidebasiertem Material vor, während oder nach dem Rösten;
e) Unterziehen der gerösteten Mischung einer Verdampfung, um getreidebasiertes Crumb für Schokolade zu erhalten; und
f) optional Mahlen des getreidebasierten Crumbs für Schokolade in Stücke gewünschter Größe, **dadurch gekennzeichnet, dass** das getreidebasierte Material Haferpulver oder Hafermehl ist, das mit Beta-Glucanase-Enzymen fermentiert oder enzymatisch behandelt wird.

2. Verfahren nach Anspruch 1, wobei Schritt a) Zugeben von Zucker zum wässrigen Medium oder Bereitstellen von Zucker zum wässrigen Medium durch die Wirkung von Enzymen umfasst.

3. Verfahren nach einem der vorstehenden Ansprüche, wobei der Trockenmassegehalt der wässrigen Mischung während des Röstens 40-98%, vorzugsweise 40-95 %, bevorzugter 60-90 %, oder bevorzugter 80-90 % beträgt.

4. Verfahren nach einem der vorstehenden Ansprüche, wobei Schritt (b) Rösten der wässrigen Mischung aus Zucker und getreidebasiertem Material eine Röstzeit lang umfasst, die vorzugsweise mindestens 10 Minuten, bevorzugter mindestens 20 Minuten, beispielsweise 20-120 Minuten oder 30-60 Minuten, bei einer Rösttemperatur beträgt, die zu Beginn des Röstens der Siedetemperatur der Mischung bei Atmosphärendruck entspricht.

5. Verfahren nach einem der vorstehenden Ansprüche, das den Schritt zum Zugeben und Mischen von Pflanzenfett zur wässrigen Mischung aus Zucker und getreidebasiertem Material umfasst, wobei das Pflanzenfett vorzugsweise aus Kakaobutter, Kakaobutter-Äquivalent und einem pflanzlichen Füllfett, wie beispielsweise pflanzlichem Füllfett aus Nüssen, Kokosnuss oder Mandeln, beispielsweise in Form von Milch, Paste, Pulver, Flocken oder Stücken, vorzugsweise Kakaobutter ausgewählt ist.

6. Verfahren nach einem der vorstehenden Ansprüche, das den Schritt zum Zugeben und Mischen von Kakaomasse, Kakaopulver, Kakaobutter oder einer Mischung verschiedener Kakaobestandteilen zur wässrigen Mischung aus Zucker und getreidebasiertem Material umfasst, die optional auch pflanzliches Fett nach Rösten und vor Verdampfen umfasst.

7. Verfahren nach einem der vorstehenden Ansprüche, wobei Schritt (e) eine Vakuumverdampfung oder thermische Verdampfung, vorzugsweise Vakuumverdampfung bei einem Druck von -1000 - -800 mbar (-100 - -80 kPa) eine Vakuumverdampfungszeit von mindestens 10 Minuten lang, bevorzugter eine Vakuumverdampfungszeit von 10-40 Minuten lang umfasst.

8. Verfahren nach einem der vorstehenden Ansprüche, wobei das erhaltene getreidebasierte Crumb für Schokolade einen Endwassergehalt von 0,5-5 Gew.-%, vorzugsweise 1-5 Gew.-%, bevorzugter 1-4 Gew.-%, ganz besonders bevorzugt 1-3 Gew.-% aufweist.

9. Verfahren nach einem der vorstehenden Ansprüche, wobei der Mischung aus Schritt (a) mindestens ein Enzym zugegeben wird.

10. Verfahren nach einem der vorstehenden Ansprüche, das weiter den Schritt des Zugebens von Pflanzenfett zu dem getreidebasierten Crumb für Schokolade umfasst, um einen Brei zu erhalten, der nass gemahlen und als pumpfähiger Rohstoff bei der Herstellung von Süßwaren, vorzugsweise Schokolade oder Schokoladenfüllungen, verwendet wird.

11. Verfahren nach einem der vorstehenden Ansprüche zur Herstellung von haferbasiertem Crumb für Schokolade, wobei das Verfahren die Schritte umfasst, zum
a) Bereitstellen einer wässrigen Mischung aus Zucker und Haferpulver oder Hafermehl, wobei das Haferpulver oder Hafermehl mit Beta-Glucanase-Enzymen fermentiert oder enzymatisch behandelt wird;
b) Rösten der wässrigen Mischung aus Zucker und Haferpulver oder Hafermehl, vorzugsweise bei einer Temperatur von 90-140 °C oder 100-120 °C, vorzugsweise mindestens 10-30 Minuten lang, um eine geröstete flüssige Mischung zu erhalten;
c) Zugeben und Mischen von Kakaopulver, Kakaomasse, Kakaobutter oder einer beliebigen Kombination davon und optional pflanzlichem Fett zur wässrigen Mischung aus Zucker und Haferpulver oder Hafermehl vor, während oder nach dem Rösten, vorzugsweise vor oder während des Röstens;
d) Unterziehen der gerösteten flüssigen Mischung einer Vakuumverdampfung, vorzugsweise bei einem Druck von -100 - -80 kPa, um eine Phasenänderung der gerösteten Mischung von flüssiger zu Pulverform zu erhalten; und
e) optional Mahlen des vakuumverdampften Pulvers, um haferbasiertes Crumb für Schokolade gewünschter Größe zu erhalten.

12. Verfahren nach Anspruch 1 zur Herstellung von haferbasiertem Crumb für Schokolade, umfassend die Schritte zum
a) Bereitstellen einer Mischung aus Zucker und Haferpulver oder Hafermehl, wobei das Haferpulver oder Hafermehl mit Beta-Glucanase-Enzymen fermentiert oder enzymatisch behandelt wird, in Wasser, um eine wässrige Mischung aus Zucker und Haferpulver oder Hafermehl zu erhalten;
b) Rösten der wässrigen Mischung aus Zucker und Haferpulver oder Hafermehl, vorzugsweise bei einer Temperatur von 90-140 °C mindestens 10-30 Minuten lang, um eine geröstete flüssige Mischung zu erhalten;
c) Zugeben und Mischen von Kakaomasse, Kakaopulver oder beidem zur Mischung vor, während oder nach dem Rösten;
d) Zugeben von Kakaobutter vor, während oder nach dem Rösten;
e) Unterziehen der gerösteten flüssigen Mischung einer Vakuumverdampfung, um eine Phasenänderung der gerösteten Mischung von flüssiger zu Pulverform zu erhalten; und
f) optional Mahlen des vakuumverdampften Pulvers, um haferbasiertes Crumb für Schokolade gewünschter Größe zu erhalten.

13. Verfahren nach einem der vorstehenden Ansprüche, das weiter den Schritt zum Verwenden des erhaltenen getreidebasierten Crumbs für Schokolade bei der Herstellung von milchfreien Süßwaren und Backwaren, insbesondere Schokolade, umfasst.

14. Milchfreies Crumb für Schokolade, **dadurch gekennzeichnet, dass** es durch das Verfahren nach einem der Ansprüche 1 bis 12 erhältlich ist, und eine geröstete Mischung aus Zucker und Haferpulver oder Hafermehl umfasst, das mit Beta-Glucanase-Enzymen fermentiert oder enzymatisch behandelt wird, mit Kakao-Rohstoff, wobei der Kakao-Rohstoff aus Kakaomasse, Kakaopulver, Kakaobutter oder einer beliebigen Kombination davon ausgewählt ist, vorzugsweise zusammen mit Pflanzenfett, wobei das Crumb für Schokolade einen Wassergehalt von 0,5-5 Gew.-%, typischerweise 1-5 Gew.-%, vorzugsweise 1-4 Gew.-%, bevorzugter 1-3 Gew.-% aufweist, und wobei der körnige Geschmack des Getreidemehls oder Getreidepulvers im Vergleich zu ungeröstetem Getreidemehl oder Getreidepulver verringert ist.

15. Milchfreies Crumb für Schokolade nach Anspruch 14, das eine geröstete Mischung aus Saccharose oder Saccharose/Fructose und Haferpulver oder Hafermehl, das mit Beta-Glucanase-Enzymen fermentiert oder enzymatisch behandelt wird, zusammen mit Kakaobutter, vorzugsweise eine geröstete Mischung aus Saccharose und Haferpulver oder Hafermehl zusammen mit Kakaobutter umfasst.

16. Nahrungsmittelprodukt, welches das Crumb für Schokolade nach Anspruch 14 oder 15 enthält, wobei das Nahrungsmittelprodukt aus der Gruppe ausgewählt ist, bestehend aus Süßwaren, süßen Backwaren, Getränken, Aufstrichen und Snackprodukten, und wobei das Nahrungsmittelprodukt vorzugsweise ein Süßwarenprodukt oder süßes Backwarenprodukt ist, ausgewählt aus der Gruppe bestehend aus schokoladeartigen Produkten, gefüllten schokoladeartigen Produkten, wie beispielsweise Schokoladenpralinen, Schokoladentafeln, schokoladenüberzogenen Füllungen, schokoladenüberzogenen Riegeln, keksartigen Produkten, Füllungen für keksartige Produkte, schokoladenüberzogenen Kuchen, schokoladenüberzogenen Einlagen, schokoladenüberzogenem oder gefülltem gepopptem Getreide, Müsliriegeln mit Einlagen oder Schokoladenüberzug, und gefüllten süßen Backwarenprodukten wie Croissants und Törtchen.

17. Verwendung des Crumbs für Schokolade nach Anspruch 14 oder 15 bei der Herstellung von Nahrungsmittelprodukten, vorzugsweise Süßwaren oder süßen Backwaren.

## Revendications

1. Procédé de préparation de crumb non laitier à base de céréales, comprenant les étapes de :
a) fourniture d'un mélange de sucre et de matière à base de céréales dans un milieu aqueux pour obtenir un mélange aqueux de sucre et de matière à base de céréales ;
b) torréfaction du mélange aqueux de sucre et de matière à base de céréales ;
c) ajout et mélange de la masse de cacao, de la poudre de cacao, du beurre de cacao ou d'un mélange de différents composants du cacao au mélange aqueux de sucre et de matière à base de céréales avant, pendant ou après la torréfaction ;
d) ajout et mélange éventuels de la matière grasse végétale au mélange aqueux de sucre et de matière à base de céréales avant, pendant ou après la torréfaction ;
e) soumission du mélange torréfié à l'évaporation pour obtenir un crumb à base de céréales ; et
f) broyage éventuel du crumb à base de céréales en morceaux de la taille souhaitée, **caractérisée en ce que** le matériau à base de céréales est de la poudre d'avoine ou de la farine d'avoine, qui est fermentée ou traitée enzymatiquement avec des enzymes bêta-glucanase.

2. Procédé selon la revendication 1, dans lequel l'étape a) comprend l'ajout de sucre au milieu aqueux, ou l'apport de sucre au milieu aqueux par l'action d'enzymes.

3. Procédé selon l'une quelconque des revendications précédentes, dans lequel la teneur en matière sèche du mélange aqueux pendant la torréfaction est de 40-98 %, de préférence de 40-95 %, plus préférentiellement de 60-90 %, ou, plus préférentiellement encore de 80-90 %.

4. Procédé selon l'une quelconque des revendications précédentes, dans lequel l'étape (b) comprend la torréfaction du mélange aqueux de sucre et de matière à base de céréales pendant une durée de torréfaction, de préférence d'au moins 10 minutes, plus préférentiellement d'au moins 20 minutes, par exemple 20-120 minutes ou 30-60 minutes, à une température de torréfaction qui, au début de la torréfaction, est la température du point d'ébullition du mélange à pression atmosphérique.

5. Procédé selon l'une quelconque des revendications précédentes, qui comprend l'étape d'ajout et de mélange de matière grasse végétale au mélange aqueux de sucre et de matière à base de céréales, dans lequel la matière grasse végétale est de préférence choisie parmi le beurre de cacao, un équivalent de beurre de cacao et une matière grasse de remplissage végétale, telle qu'une matière grasse de remplissage végétale à base de noix, de noix de coco ou d'amandes, par exemple sous forme de lait, de pâte, de poudre, de flocons ou de morceaux, de préférence du beurre de cacao.

6. Procédé selon l'une quelconque des revendications précédentes, qui comprend l'étape d'ajout et de mélange de masse de cacao, de poudre de cacao, de beurre de cacao ou d'un mélange de différents composants du cacao au mélange aqueux de sucre et de matière à base de céréales, qui comprend éventuellement aussi de la matière grasse végétale, après torréfaction et avant évaporation.

7. Procédé selon l'une quelconque des revendications précédentes, dans lequel l'étape (e) comprend une évaporation sous vide ou une évaporation thermique, de préférence une évaporation sous vide à une pression de -1000 - -800 mbar (-100 - - 80 kPa) pendant une durée d'évaporation sous vide d'au moins 10 minutes, plus préférentiellement pendant une durée d'évaporation sous vide de 10-40 minutes.

8. Procédé selon l'une quelconque des revendications précédentes, dans lequel le crumb à base de céréales obtenue présente une teneur en eau finale de 0,5-5 % en poids, de préférence de 1-5 %, plus préférentiellement de 1-4 %, et plus préférentiellement encore de 1-3 % en poids.

9. Procédé selon l'une quelconque des revendications précédentes, dans lequel au moins une enzyme est ajoutée au mélange de l'étape (a).

10. Procédé selon l'une quelconque des revendications précédentes, qui comprend en outre l'étape d'ajout de graisse végétale au crumb à base de céréales pour obtenir une suspension, laquelle est broyée par voie humide et utilisée comme matière première pompable dans la fabrication de produits de confiserie, de préférence du chocolat ou des fourrages au chocolat.

11. Procédé selon l'une quelconque des revendications précédentes pour la préparation de crumb à base d'avoine, dans lequel le procédé comprend les étapes de :
a) fourniture d'un mélange aqueux de sucre et de poudre d'avoine ou de farine d'avoine, dans lequel la poudre d'avoine ou la farine d'avoine est fermentée ou traitée enzymatiquement avec des enzymes bêta-glucanases ;
b) torréfaction du mélange aqueux de sucre et de poudre d'avoine ou de farine d'avoine, de préférence à une température de 90-140 °C ou de 100-120 °C pendant au moins 10 à 30 minutes, pour obtenir un mélange liquide torréfié ;
c) ajout et mélange de la poudre de cacao, de la pâte de cacao, du beurre de cacao ou toute combinaison de ceux-ci et éventuellement de la matière grasse végétale au mélange aqueux de sucre et de poudre d'avoine ou de farine d'avoine avant, pendant ou après la torréfaction, de préférence avant ou pendant la torréfaction ;
d) soumission du mélange liquide torréfié à une évaporation sous vide, de préférence à une pression de -100 - -80 kPa, pour obtenir un changement de phase du mélange torréfié de l'état liquide à l'état de poudre ; et
e) broyage éventuel de la poudre évaporée sous vide pour obtenir un crumb à base d'avoine de la taille souhaitée.

12. Procédé selon la revendication 1 pour la préparation de crumb à base d'avoine, comprenant les étapes de :
a) fourniture d'un mélange de sucre et de poudre d'avoine ou de farine d'avoine, dans lequel la poudre d'avoine ou la farine d'avoine est fermentée ou traitée enzymatiquement avec des enzymes bêta-glucanases, dans l'eau pour obtenir un mélange aqueux de sucre et de poudre d'avoine ou de farine d'avoine ;
b) torréfaction du mélange aqueux de sucre et de poudre d'avoine ou de farine d'avoine, de préférence à une température de 90-140 °C pendant au moins 10 à 30 minutes, pour obtenir un mélange liquide torréfié ;
c) ajout et mélange de la pâte de cacao, de la poudre de cacao ou les deux au mélange avant, pendant ou après la torréfaction ;
d) ajout du beurre de cacao avant, pendant ou après la torréfaction ;
e) soumission du mélange liquide torréfié à une évaporation sous vide pour obtenir un changement de phase du mélange torréfié de l'état liquide à l'état de poudre ; et
f) broyage éventuel de la poudre évaporée sous vide pour obtenir un crumb à base d'avoine de la taille souhaitée.

13. Procédé selon l'une quelconque des revendications précédentes, qui comprend en outre l'étape d'utilisation du crumb à base de céréales obtenue dans la fabrication de produits de confiserie et de boulangerie non laitiers, notamment de chocolat.

14. Crumb non laitier, **caractérisée en ce qu'**il est obtenu par le procédé selon l'une quelconque des revendications 1 à 12 et comprend un mélange torréfié de sucre et de poudre d'avoine ou de farine d'avoine, fermenté ou traité enzymatiquement avec des enzymes bêta-glucanases, avec de la matière première cacaotée, dans laquelle la matière première cacaotée est choisie parmi la masse de cacao, la poudre de cacao, le beurre de cacao et toute combinaison de ceux-ci, de préférence avec de la matière grasse végétale, dans lequel le crumb présente une teneur en eau de 0,5-5 % en poids, généralement de 1-5 %, de préférence de 1-4 %, plus préférentiellement de 1-3 % en poids, et dans lequel la saveur granuleuse de la farine de céréales ou de la poudre de céréales est réduite par rapport à la farine de céréales ou à la poudre de céréales non torréfiées.

15. Crumb non laitier selon la revendication 14, qui comprend un mélange torréfié de saccharose ou de saccharose/fructose et de la poudre d'avoine ou de la farine d'avoine, fermentée ou traitée enzymatiquement avec des enzymes bêta-glucanase, ainsi que du beurre de cacao, de préférence un mélange torréfié de saccharose et de poudre d'avoine ou de farine d'avoine avec du beurre de cacao.

16. Produit alimentaire contenant le crumb selon la revendication 14 ou 15, dans lequel le produit alimentaire est choisi parmi le groupe consistant en des produits de confiserie, des produits de boulangerie sucrés, des boissons, des pâtes à tartiner et des produits de grignotage, et dans lequel le produit alimentaire est de préférence un produit de confiserie ou un produit de boulangerie sucré choisi parmi le groupe consistant en des produits de type chocolat, des produits de type chocolat fourrés, tels qu'une praline au chocolat, des tablettes de chocolat, des fourrages enrobés de chocolat, des barres enrobées de chocolat, des produits de type biscuit, des fourrages pour produits de type biscuit, des gâteaux enrobés de chocolat, des inclusions enrobées de chocolat, des céréales soufflées enrobées ou fourrées de chocolat, des barres de céréales avec inclusions ou enrobées de chocolat, et des produits de boulangerie sucrés fourrés comme des croissants et des tartes.

17. Utilisation du crumbselon la revendication 14 ou 15 dans la fabrication de produits alimentaires, de préférence de confiseries ou de produits de boulangerie sucrés.
